(19) **Europäisches Patentamt / European Patent Office / Office européen des brevets**

(11) **EP 4 697 622 A1**

(12) # EUROPEAN PATENT APPLICATION
published in accordance with Art. 153(4) EPC

(43) Date of publication:
**18.02.2026 Bulletin 2026/08**

(21) Application number: **24918360.9**

(22) Date of filing: **27.12.2024**

(51) International Patent Classification (IPC):
**H04B 7/185** (2006.01)

(52) Cooperative Patent Classification (CPC):
**H04B 7/185**

(86) International application number:
**PCT/CN2024/143128**

(87) International publication number:
**WO 2025/152752 (24.07.2025 Gazette 2025/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.01.2024  CN 202410081118**

(71) Applicant: **Huawei Technologies Co., Ltd.
Shenzhen, Guangdong 518129 (CN)**

(72) Inventors:
- **NI, Gang**
  **Shenzhen, Guangdong 518129 (CN)**
- **LAN, Yuan**
  **Shenzhen, Guangdong 518129 (CN)**
- **ZHOU, Jun**
  **Shenzhen, Guangdong 518129 (CN)**
- **XU, Chunhui**
  **Shenzhen, Guangdong 518129 (CN)**
- **WU, Zhaohui**
  **Shenzhen, Guangdong 518129 (CN)**
- **HUANG, Tao**
  **Shenzhen, Guangdong 518129 (CN)**
- **ZHAI, Yibin**
  **Shenzhen, Guangdong 518129 (CN)**
- **SUN, Jie**
  **Shenzhen, Guangdong 518129 (CN)**
- **LIANG, Xuewan**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **MULTIMEDIA TRANSMISSION METHOD AND RELATED DEVICE**

(57) A multimedia transmission method and a related device are provided, so that multimedia transmission can be implemented via a satellite in areas beyond coverage of a terrestrial mobile communication network. For example, when a first device is in an out-of-network state, the first device receives a first operation, where the first operation is used to trigger sending of multimedia to a second device. The first device sends N multimedia data streams to a satellite, where the N multimedia data streams are data streams obtained by compressing the multimedia, N is a positive integer, a data volume of each of the N multimedia data streams does not exceed a first threshold, the first threshold is less than or equal to a transmission bandwidth of the satellite, and a total data volume of the N multimedia data streams does not exceed a second threshold.

FIG. 3

**Description**

CROSS-REFERENCE TO RELATED APPLICATIONS

This application claims priority to Chinese Patent Application No. 202410081118.5, filed with the China National Intellectual Property Administration on January 19, 2024 and entitled "MULTIMEDIA TRANSMISSION METHOD AND RELATED DEVICE", which is incorporated herein by reference in its entirety.

TECHNICAL FIELD

This application relates to the field of terminal technologies, and in particular, to a multimedia transmission method and a related device.

BACKGROUND

A terrestrial mobile communication network provides convenient services for life of people. However, in regions such as oceans, forests, or deserts, coverage of the terrestrial mobile communication network is affected due to difficulties in deploying terrestrial base stations. Consequently, groups such as marine workers and field explorers, once in danger, are unable to send distress signals to the outside world due to no network connectivity (due to a lack of coverage of the terrestrial mobile communication network), resulting in missed rescue opportunities.

SUMMARY

Embodiments of this application provide a multimedia transmission method and a related device, so that multimedia transmission can be implemented in areas beyond coverage of a terrestrial mobile communication network.

According to a first aspect, a multimedia transmission method is provided, and is applied to a first device. For example, the first device may be a terminal device such as a mobile phone or a PC. The method includes: The first device is in an out-of-network state. The first device receives a first operation, where the first operation is used to trigger sending of multimedia to a second device. The first device sends N multimedia data streams to a satellite, where the N multimedia data streams are data streams obtained by compressing the multimedia, N is a positive integer, a data volume of each of the N multimedia data streams does not exceed a first threshold, the first threshold is less than or equal to a transmission bandwidth of the satellite, and a total data volume of the N multimedia data streams does not exceed a second threshold.

In this embodiment of this application, when the first device is in the out-of-network state, the first device may send the multimedia, for example, an image, to another device via the satellite. In addition, the first device may compress the multimedia to obtain the N multimedia data streams, where the data volume of each multimedia data stream does not exceed the transmission bandwidth of the satellite, to ensure that each multimedia data stream can be successfully sent as much as possible. In addition, in this embodiment of this application, it is considered that if there are excessive multimedia data streams (that is, N is excessively large), it takes a long time to complete sending of the N multimedia data streams. To avoid excessively long sending time, in this embodiment of this application, the total data volume of the N multimedia data streams does not exceed the second threshold. Therefore, N is not excessively large and sending duration is not excessively long, so that user experience is not affected.

In a possible design, a first multimedia data stream in the N multimedia data streams is carried in a first packet for sending, the first multimedia data stream is one or more data streams in the N multimedia data streams, and the first packet further includes at least one of the following:

first indication information, indicating a type of the multimedia;
second indication information, indicating a size of the multimedia;
third indication information, indicating an identifier of the first device; and
fourth indication information, indicating an identifier of the second device.

In this embodiment of this application, the first packet may indicate a type, a size, and the like of the multimedia. Therefore, a receive end may learn of the type, the size, and the like of the received multimedia by using the first packet, to improve accuracy of decompressing the multimedia data streams by the receive end to obtain the multimedia.

In a possible design, the first multimedia data stream may include any one or more of the N multimedia data streams, a first sent multimedia data stream in the N multimedia data streams, a last sent multimedia data stream in the N multimedia data streams, or a multimedia data stream with a minimum data volume in the N multimedia data streams.

In a possible design, the multimedia includes a first image, the N multimedia data streams respectively correspond to N pieces of feature information of the first image, and a sending sequence of the N multimedia data streams is determined based on a priority relationship between the N pieces of feature information.

In this embodiment of this application, when sending an image to the second device via the satellite, the first device may preferentially send a multimedia data stream corresponding to feature information 1 of the image, and then send a multimedia data stream corresponding to feature information 2. A priority of the feature information 1 is higher than that of the feature information 2. In this way, a peer end first obtains the feature information 1 and can restore content corresponding to the feature information 1 (for example, an edge contour of an object on the image), and then receives the feature information 2 and restores content corresponding to the feature information 2 (for example, details of the object on the image), to implement gradient transmission of the image from blur to definition.

In a possible design, the N multimedia data streams include a second multimedia data stream and a third multimedia data stream, when the following condition is met, a sending time of the second multimedia data stream is earlier than that of the third multimedia data stream, and the condition includes: feature information corresponding to the second multimedia data stream describes an edge contour of an object in the first image, and feature information corresponding to the third multimedia data stream describes details of the object in the first image; or feature information corresponding to the second multimedia data stream describes a first object in the first image, and feature information corresponding to the third multimedia data stream describes a second object in the first image, where a priority of the first object is higher than that of the second object.

In this embodiment of this application, because the second multimedia data stream is preferentially sent, after receiving the second multimedia data stream, the peer end may restore an approximate contour of the object in the image based on the feature information of the second multimedia data stream. In this way, even if the third multimedia data stream fails to be sent, the peer end may also learn of general content of the image. Certainly, if the third multimedia data stream is successfully sent, the peer end may add details to the image based on the feature information of the third multimedia data stream, to improve definition of the image. Alternatively, because the second multimedia data stream is preferentially sent, after receiving the second multimedia data stream, the peer end may restore the first object in the image based on the feature information of the second multimedia data stream. In this way, even if the third multimedia data stream fails to be sent, the peer end may also learn that the image includes the first object. Certainly, if the third multimedia data stream is successfully sent, the peer end may restore the second object based on the feature information of the third multimedia data stream, to improve integrity of the image.

In a possible design, the second multimedia data stream or the third multimedia data stream may be the first multimedia data stream.

In a possible design, the multimedia is the first image, and the N multimedia data streams are data streams obtained by compressing different areas of the first image at different compression ratios, so that a second image is obtained by decompressing the N multimedia data streams, where different areas of the second image have different definition.

It should be noted that, if the image is large, the image needs to be compressed at a high compression ratio, to ensure that the image can be successfully sent. For example, a total data volume of compressed multimedia data streams does not exceed the second threshold. It should be understood that once the compression ratio is high, definition of the image is extremely low and viewing by the receive end is affected. In this embodiment of this application, when it is ensured that the total data volume of the compressed multimedia data streams does not exceed the second threshold, differentiated compression may be performed on different areas of the image. For example, a low compression ratio is used for some areas to ensure definition of these areas, and a high compression ratio is used for other areas to reduce a transmitted data volume. In this way, definition of the different areas of the image received by the receive end is different.

In a possible design, before receiving the first operation, the method further includes: receiving a second operation, where the second operation is used to set definition of the different areas of the first image.

In this embodiment of this application, when a user of the first device wants to send an image to the second device via the satellite, the user may set definition of different areas of the image. The first device performs differentiated compression on the different areas of the image based on a user setting, and sends the compressed image to the second device via the satellite. In this case, definition of different areas of an image obtained by the second device is different. In this manner, the user of the transmit end may set definition of different areas as required. If the user wants the peer end to focus on a specific area, the user sets a high definition of the area, to ensure that the receiver can clearly see content of the area after receiving the image.

In a possible design, the second operation is used to set definition influencing factors of the different areas of the first image. The definition impact factor may be understood as a parameter that can affect definition. For example, if a compression ratio affects definition, the second operation may be setting compression ratios of different areas.

In a possible design, the method further includes: displaying the second image.

In this embodiment of this application, when the user of the first device wants to send an image to the second device via the satellite, the user may set definition of different areas of the image, and the first device may display a definition setting result (that is, the second image), so that the user learns of the definition setting result.

In a possible design, the N multimedia data streams are data streams obtained by compressing a target area and a non-target area of the first image at different compression ratios, the target area includes at least one of a user-specified area, an area in which a target object is located, and an area in a middle location, and the non-target area is an area other than the target area.

In this embodiment of this application, when it is ensured that the total data volume of the compressed multimedia data streams does not exceed the second threshold, differentiated compression may be performed on the target area and the non-target area of the image. For example, definition of the target area is higher than that of the non-target area. In this way, the receiver can clearly see content in the target area, to avoid a case in which the content in the target area fails to be transmitted because the target area is excessively compressed.

In a possible design, the method further includes: receiving a returned message from the satellite, where the returned message indicates that the N multimedia data streams are successfully sent.

In this embodiment of this application, after sending the N multimedia data streams to the satellite, the first device may receive a receipt from the satellite, to indicate that the multimedia data streams are successfully sent. The first device may output the receipt, to indicate to the user that the multimedia data streams are successfully sent. This improves user experience.

In a possible design, sending the N multimedia data streams to the satellite includes: sending M multimedia data streams to the satellite, where the M multimedia data streams are one or more of the N multimedia data streams, and M is a positive integer; and when receiving a returned message from the satellite, sending remaining N-M multimedia data streams to the satellite, where the returned message indicates that the M multimedia data streams are successfully sent.

In this embodiment of this application, the first device may send the N multimedia data streams to the satellite a plurality of times. Because completely sending the N multimedia data streams takes specific duration, to ensure that the first device maintains communication with the satellite within the duration, the first device may first send a part of the multimedia data streams, and then wait for a receipt from the satellite. If the first device receives the receipt, it indicates that the first device maintains communication with the satellite. In this case, the first device may continue to send other multimedia data streams. This avoids a waste of power caused by continuing to send a multimedia data stream to the satellite when communication between the first device and the satellite is interrupted.

According to a second aspect, a multimedia transmission method is further provided, and the method is applied to a second device. For example, the second device may be a terminal device such as a mobile phone or a PC. The method includes: The second device receives N multimedia data streams sent via a satellite, where N is a positive integer, a data volume of each of the N multimedia data streams does not exceed a first threshold, the first threshold is less than or equal to a transmission bandwidth of the satellite, and a total data volume of the N multimedia data streams does not exceed a second threshold. The second device obtains multimedia based on the N multimedia data streams.

In a possible design, a first multimedia data stream in the N multimedia data streams is carried in a first packet, the first multimedia data stream is one or more data streams in the N multimedia data streams, and the first packet further includes at least one of the following:

first indication information, indicating a type of the multimedia;
second indication information, indicating a size of the multimedia;
third indication information, indicating an identifier of the first device; and
fourth indication information, indicating an identifier of the second device.

In a possible design, the first multimedia data stream may include any one or more of the N multimedia data streams, a first received multimedia data stream in the N multimedia data streams, a last received multimedia data stream in the N multimedia data streams, or a multimedia data stream with a minimum data volume in the N multimedia data streams.

In a possible design, the multimedia is a first image, and the method further includes: displaying the first image, where different areas of the first image have different definition.

In a possible design, obtaining the multimedia based on the N multimedia data streams includes: obtaining the first image based on a second multimedia data stream in the N multimedia data streams, where the first image includes an edge contour of an object; and obtaining a second image based on a third multimedia data stream in the N multimedia data streams and the first image, where the second image includes details of the object, and a receiving time of the third multimedia data stream is later than that of the second multimedia data stream.

In this embodiment of this application, because the second multimedia data stream is preferentially received, the second device may restore an approximate contour of the object in the image based on feature information of the second multimedia data stream. In this way, even if the third multimedia data stream is not received, general content of the image may be learned of. Certainly, if the third multimedia data stream is received, details may be added to the image based on feature information of the third multimedia data stream, to improve definition of the image.

In a possible design, obtaining the multimedia based on the N multimedia data streams includes: obtaining the first image based on a second multimedia data stream in the N multimedia data streams, where the first image includes a first object; and obtaining a second image based on a third multimedia data stream in the N multimedia data streams and the first image, where the second image includes the first object and a second object, and a receiving time of the third multimedia data stream is later than that of the second multimedia data stream.

In this embodiment of this application, because the second multimedia data stream is preferentially sent, after receiving the second multimedia data stream, the second device may restore the first object in the image based on feature information of the second multimedia data stream. In this way, even if the third multimedia data stream is not received, it may be learned that the image includes the first object. Certainly, if the third multimedia data stream is received, the second object may be restored based on feature information of the third multimedia data stream, to improve integrity of the image.

According to a third aspect, a communication system is further provided, including a first device, a second device, and a satellite.

The first device is configured to perform steps of the method according to the first aspect.

The second device is configured to perform steps of the method according to the second aspect.

According to a fourth aspect, an electronic device is further provided, including:

> a processor, a memory, and one or more programs, where
> the one or more programs are stored in the memory, the one or more programs include instructions, and when the instructions are executed by the processor, the electronic device is caused to perform the method according to the first aspect or the second aspect.

According to a fifth aspect, a computer-readable storage medium is further provided, where the computer-readable storage medium is configured to store a computer program, and when the computer program is run on a computer, the computer is caused to perform the method according to the first aspect or the second aspect.

According to a sixth aspect, a computer program product is further provided, including a computer program, where when the computer program is run on a computer, the computer is caused to perform the method according to the first aspect or the second aspect.

According to a seventh aspect, a chip is further provided, where the chip is coupled to a memory in an electronic device, and is configured to: invoke a computer program stored in the memory and perform the technical solution according to the first aspect or the second aspect in embodiments of this application. In this embodiment of this application, "coupled" means that two components are directly or indirectly combined with each other.

For technical effects that can be achieved in the second aspect to the seventh aspect, refer to descriptions of the technical effects that can be achieved in the corresponding design solutions in the first aspect. Details are not described herein again in this application.

## BRIEF DESCRIPTION OF DRAWINGS

> FIG. 1 is a diagram of a communication system according to an embodiment of this application;
> FIG. 2A(a) to FIG. 2B(c) are diagrams in which a mobile phone A sends an image to a mobile phone B via a satellite according to an embodiment of this application;
> FIG. 3 is a schematic flowchart of a multimedia transmission method according to an embodiment of this application;
> FIG. 4 is another diagram of a communication system according to an embodiment of this application;
> FIG. 5A to FIG. 5C are diagrams of a packet sent by a mobile phone A according to an embodiment of this application;
> FIG. 6(a) to FIG. 6(c) are diagrams of receiving an image by a mobile phone B according to an embodiment of this application;
> FIG. 7A is a diagram in which a mobile phone A divides an image into areas according to an embodiment of this application;
> FIG. 7B is a diagram in which a mobile phone A sends images with different definition to a mobile phone B according to an embodiment of this application;
> FIG. 7C is a diagram in which a mobile phone A sets definition of different areas of an image according to an embodiment of this application;
> FIG. 8 is a diagram of an electronic device according to an embodiment of this application; and
> FIG. 9 is another diagram of an electronic device according to an embodiment of this application.

## DESCRIPTION OF EMBODIMENTS

The following describes some terms in embodiments of this application, to facilitate understanding of a person skilled in the art.

> (1) In embodiments of this application, "at least one" means one or more, and "a plurality of" means two or more. In addition, it should be understood that, in descriptions of this specification, terms such as "first", "second", and "third" are merely used for distinguishing and description, but should not be understood as indicating or implying relative importance, or should not be understood as indicating or implying a sequence. For example, a first device and a second device do not represent importance degrees of the first device and the second device or a sequence of the first device and the second device, and are merely used for differentiated description. The term "and/or" in embodiments of this application describes only an association relationship and represents that three relationships may exist. For example, A and/or B may represent the following three cases: Only A exists, both A and B exist, and only B exists. In addition, the character "/" in this specification generally indicates an "or" relationship between the associated objects.

(2) Orientation terms mentioned in embodiments of this application, for example, "above", "below", "left", "right", "inner", and "outer", merely indicate directions with reference to accompanying drawings. Therefore, the orientation terms are used to better and more clearly describe and understand embodiments of this application, but not to indicate or imply that a specified apparatus or element needs to have a specific orientation or be constructed or operated in a specific orientation. Therefore, this cannot be construed as a limitation on embodiments of this application.

(3) Reference to "an embodiment", "some examples", "some embodiments", or the like described in this application means that specific features, structures, or characteristics described with reference to the embodiment are included in one or more embodiments of this specification. Therefore, statements such as "in some examples", "in an embodiment", "in some embodiments", "in other embodiments", and "in some other embodiments" that appear at different places in this specification do not necessarily mean reference to a same embodiment, instead, the statements mean "one or more but not all of embodiments", unless otherwise specifically emphasized. The terms "include", "have", and their variants all mean "include but are not limited to", unless otherwise specifically emphasized in another manner.

(4) Multimedia (Multimedia) in embodiments of this application may include various media such as an image, a video, an audio, an animated image, and a sticker.

As described above, in regions such as oceans, forests, or deserts, the terrestrial mobile communication network cannot cover these areas due to difficulties in deploying terrestrial base stations. In view of this, a solution is that communication may be performed through a non-terrestrial network (non-terrestrial network, NTN) in these areas (namely, areas beyond coverage of the terrestrial mobile communication network). For example, the NTN may include a satellite, a high-altitude platform station, an uncrewed aerial vehicle, a ship, a vehicle, and the like. The satellite is used as an example. To be specific, users in regions such as oceans, forests, or deserts can communicate with the outside world via the satellite, which is of great help to groups such as marine workers and field explorers.

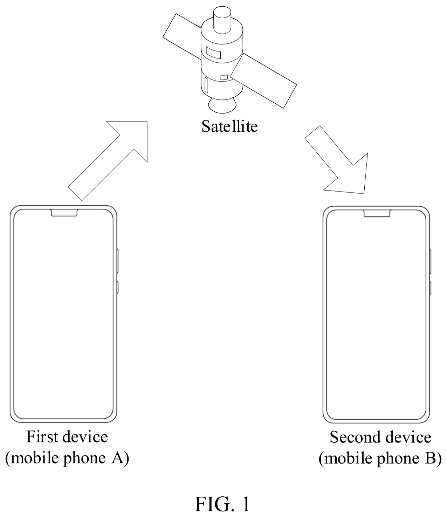

For example, FIG. 1 is a diagram of a communication system according to an embodiment of this application. As shown in FIG. 1, the communication system includes a first device, a second device, and a satellite. The first device may communicate with the second device via the satellite. It should be noted that a type of a satellite is not limited in embodiments of this application. For example, the satellite may be a low earth orbit (low earth orbit, LEO) satellite, or certainly, may be a high earth orbit (high earth orbit, HEO) satellite. For example, the satellite may be a BeiDou satellite or another satellite.

It should be noted that, in FIG. 1, an example in which both the first device and the second device are mobile phones is used. For example, the first device is a mobile phone A, and the second device is a mobile phone B. It may be understood that, in addition to a mobile phone, the first device and the second device may be devices of other types. For example, the first device may alternatively be a personal computer (Personal Computer, PC). Optionally, the PC may include a tablet computer, a notebook computer, a desktop computer, or the like. Alternatively, the first device may be a wearable device such as a watch or a band; or may be a smart home device such as a television set or a refrigerator; or may be a transportation means such as various types of vehicles, trains, and aircraft; or may be a vehicle-mounted device. For example, the vehicle-mounted device may be a smart cockpit or a system in the smart cockpit, such as in-vehicle infotainment IVI (In-Vehicle Infotainment) or another vehicle-mounted apparatus. The vehicle-mounted apparatus may be, for example, a vehicle domain controller (Vehicle Domain Controller, VDC), a smart cockpit domain controller (Cockpit Domain Controller, CDC), an intelligent driving domain controller (ADAS/AD Domain Controller, ADC), or a mobile data center (Mobile Data Center, MDC). Alternatively, the first device may be a virtual reality (Virtual Reality, VR) device, an augmented reality (Augmented Reality, AR) device, a mixed reality (Mixed Reality, MR) device, or the like. Similarly, the second device may be a PC, or may be a wearable device such as a watch or a band, or may be a smart home device such as a television set or a refrigerator, or may be a transportation means, or may be a vehicle-mounted device, or may be a VR device, an AR device, an MR device, or the like. In conclusion, device types of the first device and the second device are not limited in embodiments of this application. The first device and the second device may be devices of a same type. For example, both the first device and the second device are mobile phones. Alternatively, the first device and the second device may be devices of different types. For example, the first device is a mobile phone, and the second device is a PC. This specification is mainly described by using an example in which both the first device and the second device are mobile phones.

In addition, although FIG. 1 shows only three apparatuses, namely, the first device, the second device, and the satellite, more apparatuses may be actually included. For example, a ground station, a server, and the like may be further included between the satellite and the second device. For example, the first device sends information to the satellite, where the information includes an identifier of a recipient (for example, a phone number of the recipient). After receiving the information, the satellite sends information to the ground station. The ground station determines a corresponding server based on the identifier of the recipient in the information, and then sends the information to the server. For example, if a number of the recipient is a Chengdu number 185XXXXXXX, the ground station may send information to a server in Chengdu, and the server sends the information to the second device. A number of the second device is the number of the recipient.

FIG. 1 is still used as an example below, and an example in which a mobile phone A sends information to a mobile phone B via the satellite in FIG. 1 is used to describe a communication process between the mobile phone A and the mobile phone B.

In some examples, when the mobile phone A is in an out-of-network state, the mobile phone A may send information to outside via the satellite. Optionally, the out-of-network state may include: The mobile phone A is not connected to any network (for example, is not connected to a mobile data network such as Wi-Fi, 4G, or 5G), and a SIM card of the mobile phone A has no signal. Optionally, when the mobile phone A is in the out-of-network state, prompt information may be displayed on a display. For example, "No service" is displayed in a status bar. Certainly, in some other examples, when the mobile phone A is in a network-connected state, the mobile phone A may also send information to outside via the satellite. This is not limited in embodiments of this application.

In some embodiments, a transmission resource (for example, a bandwidth) provided by a satellite is extremely small. To ensure that the information can be successfully sent, the mobile phone A can send only a small amount of information. For example, a data volume of text information (for example, a short message service message) is small, and therefore, the mobile phone A may send the text information to the mobile phone B via the satellite. For example, the mobile phone A sends a text "There is a danger ahead" to the mobile phone B via the satellite. However, in actual use, an editing process of the text information is complex, and the text information cannot accurately and intuitively describe a current actual situation. For example, the text information cannot accurately describe special environmental characteristics in the wild or characteristics of insects in the forest.

In view of this, an embodiment of this application provides a multimedia transmission method. In the method, the mobile phone A may send multimedia to the mobile phone B via the satellite. Optionally, the multimedia may include an image, a video, an audio, an animated image, a sticker, and the like. Therefore, according to the technical solution in this embodiment of this application, because no excessive text editing operations are required, convenience is improved, and the multimedia may accurately and intuitively describe a current actual situation. As described above, a bandwidth of a transmission channel of the satellite is extremely small, but a data volume of the multimedia is large. To ensure that the multimedia can be successfully sent, in this embodiment of this application, the mobile phone A may compress the multimedia to generate a multimedia data stream. The multimedia data stream obtained through compression has a small data volume, and can be sent to the mobile phone B via the satellite.

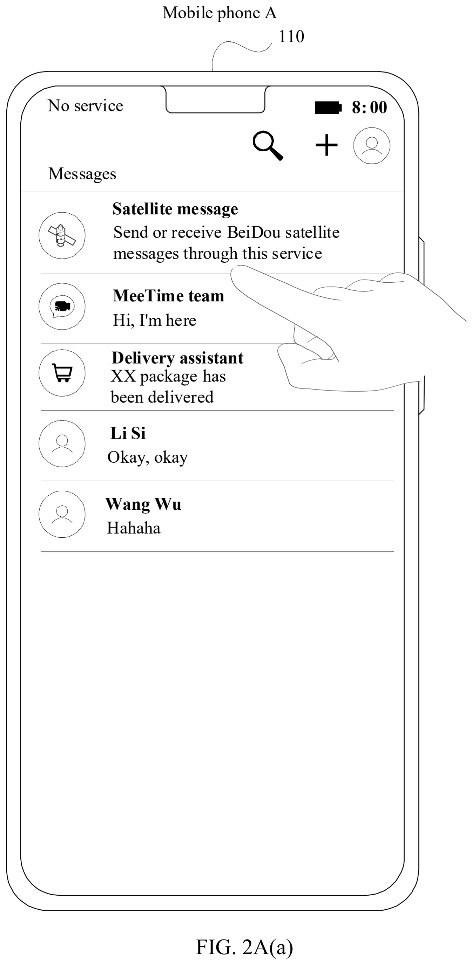

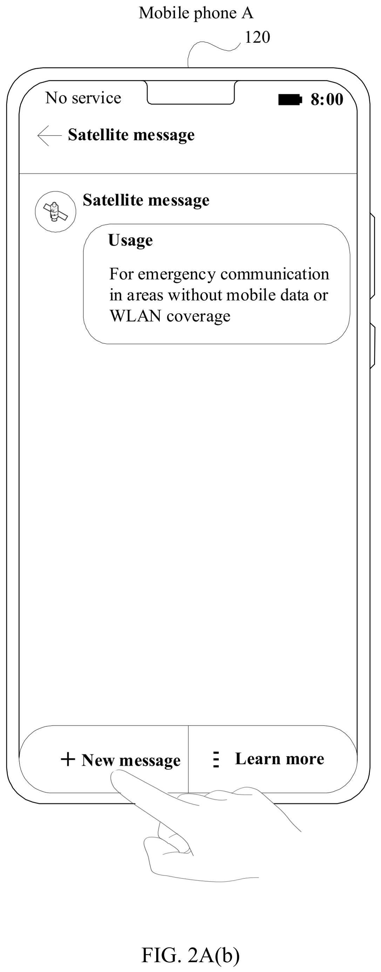

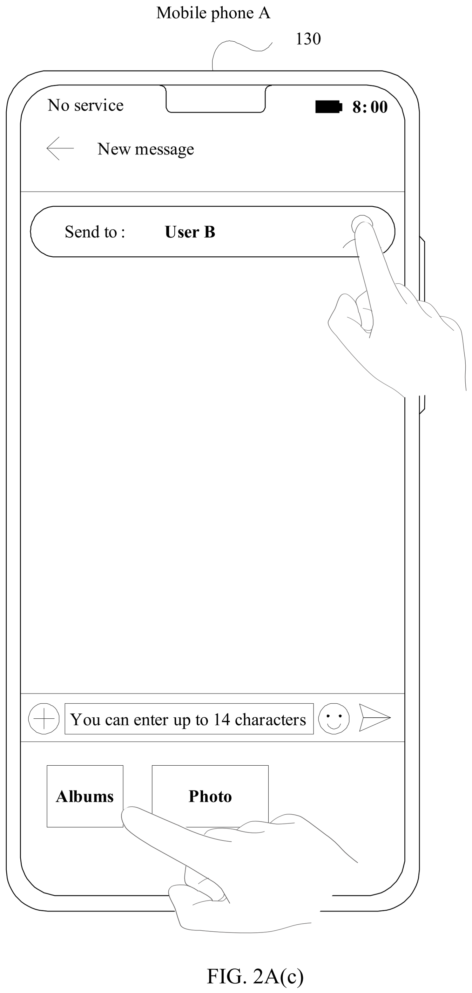

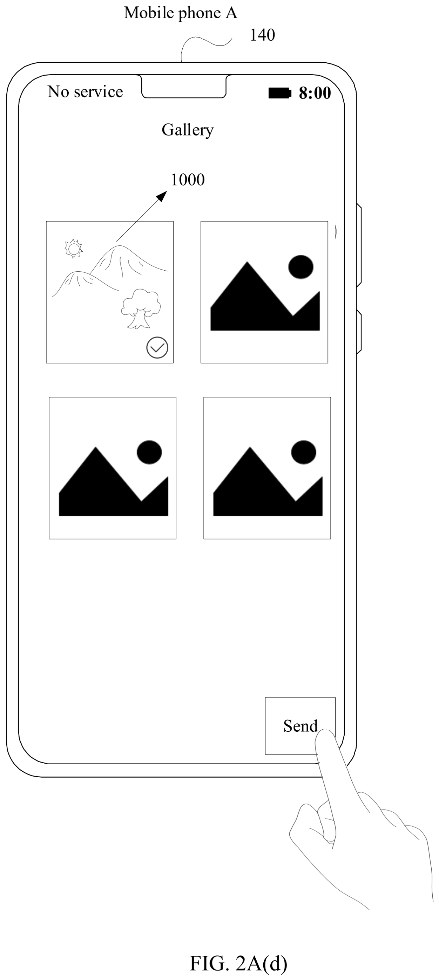

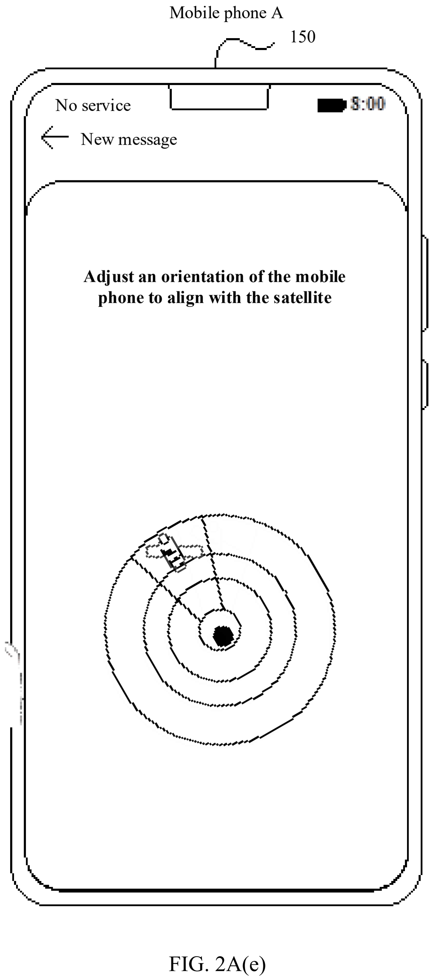

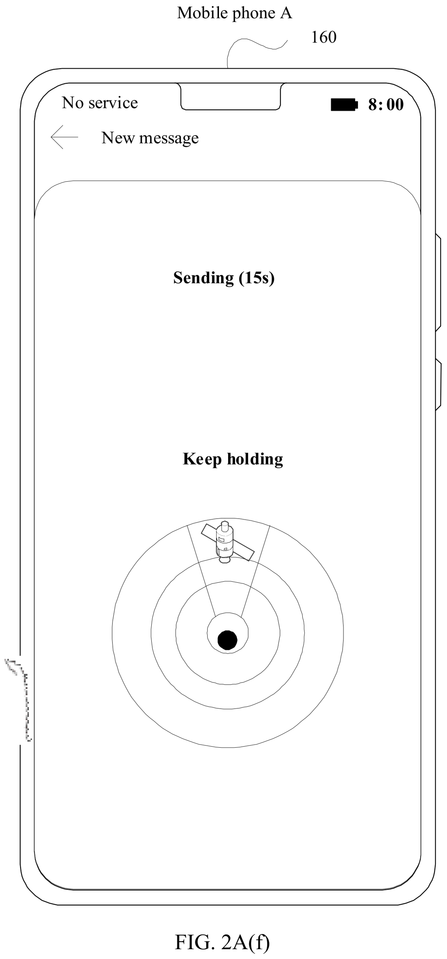

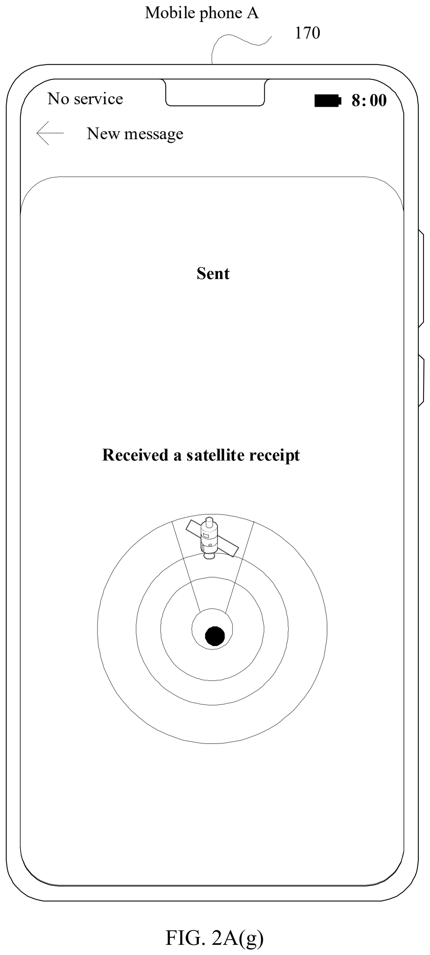

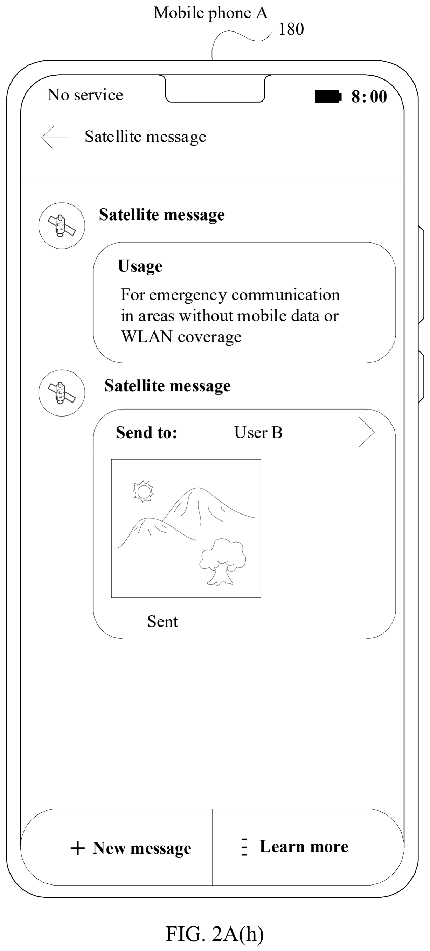

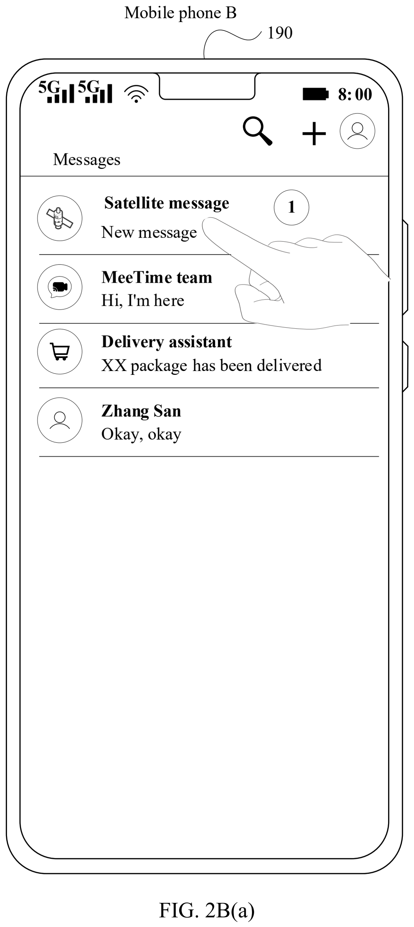

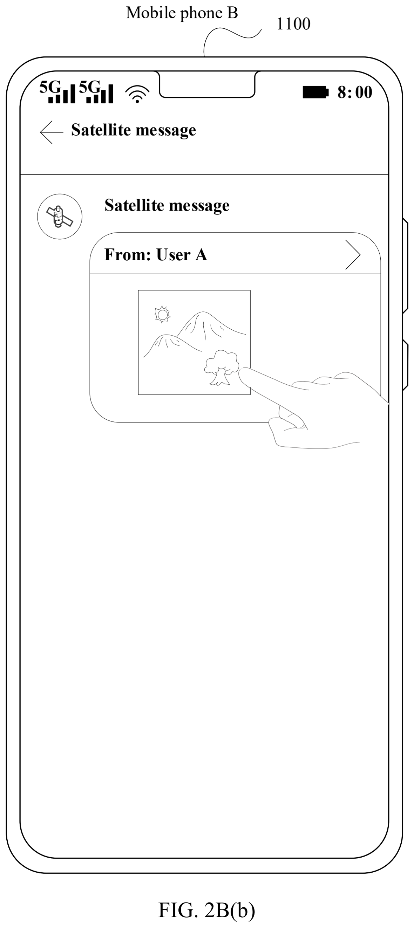

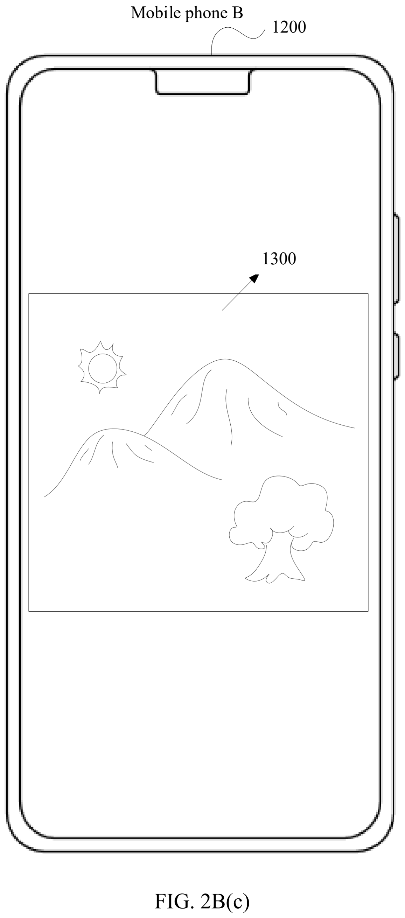

The following describes, with reference to FIG. 2A(a) to FIG. 2B(c) by using an example in which the multimedia is an image, an operation process in which the mobile phone A sends an image to the mobile phone B via the satellite.

As shown in FIG. 2A(a), the mobile phone A displays an interface 110. "No service" is displayed in a status bar on the interface 110, to indicate that the mobile phone A is currently in an out-of-network state. Refer to the foregoing descriptions. The interface 110 may be an interface of an instant messaging application (for example, a Huawei MeeTime application) in the mobile phone A. The interface 110 may include a Satellite message option. When receiving an operation (for example, a tap operation) on the Satellite message option, the mobile phone A may display an interface 120 in FIG. 2A(b). The interface 120 includes a New message button. When receiving an operation on the New message button, the mobile phone A may display an interface 130 in FIG. 2A(c). A user of the mobile phone A may select a recipient on the interface 130. For example, the selected recipient is a user B. The user of the mobile phone A may further edit or select to-be-sent content on the interface 130. For example, in FIG. 2A(c), the mobile phone A displays an Albums button when receiving an operation of tapping a button "⊕" by the user. When receiving an operation on the Albums button, the mobile phone A may display an interface 140 shown in FIG. 2A(d). The interface 140 includes a thumbnail (or referred to as a preview image) of each image in a Gallery. It is assumed that the mobile phone A detects that a first thumbnail is selected (for example, selected by a single tap), and the mobile phone A receives an operation on a Send button. In this case, an interface 150 shown in FIG. 2A(e) is displayed. The interface 150 includes prompt information: Adjust an orientation of the mobile phone to align with the satellite. The user can adjust the orientation of the mobile phone to align with the satellite. When the mobile phone detects alignment with the satellite, the mobile phone may display an interface 160 shown in FIG. 2A(f). The interface 160 includes prompt information: Sending. Stay still. In this embodiment of this application, the mobile phone A may compress a selected image to generate a multimedia data stream. Because the multimedia data stream has a small data volume, the mobile phone A may send the multimedia data stream to the mobile phone B via the satellite. After successfully sending the multimedia data stream, the mobile phone A may display an interface 170 shown in FIG. 2A(g). The interface 170 includes prompt information: Sent. Optionally, the interface 170 may further display prompt information about receiving and sending a satellite receipt. Then, the mobile phone may display an interface 180 shown in FIG. 2A(h). The interface 180 includes content sent to the user B.

In FIG. 2A(d), that the user selects a 1st image is used as an example. It may be understood that the user may further select another image, for example, a 2nd image or a 3rd image. Data volumes of images selected by the user may not be the same. A 10 MB image or a 20 MB image may be selected. In this embodiment of this application, regardless of a data volume of an image selected by the user, the mobile phone A may compress the image into a multimedia data stream whose data volume is less than or equal to a target value (for example, 800 B or 1 KB) (a specific implementation process is described below), to ensure that the image can be successfully sent to a peer end via the satellite.

FIG. 2B(a) shows an interface 190 of an instant messaging application (for example, a Huawei MeeTime application) in the mobile phone B. A Satellite message option is displayed on the interface 190. Optionally, prompt information, for example, a symbol ①, may be further displayed on the interface 190, to indicate that there is a new satellite message. When receiving an operation on the Satellite message option, the mobile phone B may display an interface 1100 in FIG. 2B(b). The interface 1100 includes a thumbnail (or referred to as a preview image) of an image sent by the mobile phone A. When receiving an operation on the thumbnail, the mobile phone B may display an interface 1200 in FIG. 2B(c). The interface 1200 includes the image sent by the mobile phone A.

It should be noted that, in FIG. 2A(a) to FIG. 2B(c), that the mobile phone A sends an image to the mobile phone B via the satellite is used as an example. Certainly, the mobile phone A may further send other multimedia such as a video, an animated image, and a sticker to the mobile phone B via the satellite. Specific operation processes are similar, and are not described by using examples one by one.

**The following describes an implementation principle by which the mobile phone A sends an image to the mobile phone B via the satellite.** It should be noted that, although sending of an image is used as an example below, implementation principles of other multimedia such as a video, an animated image, and a sticker are the same.

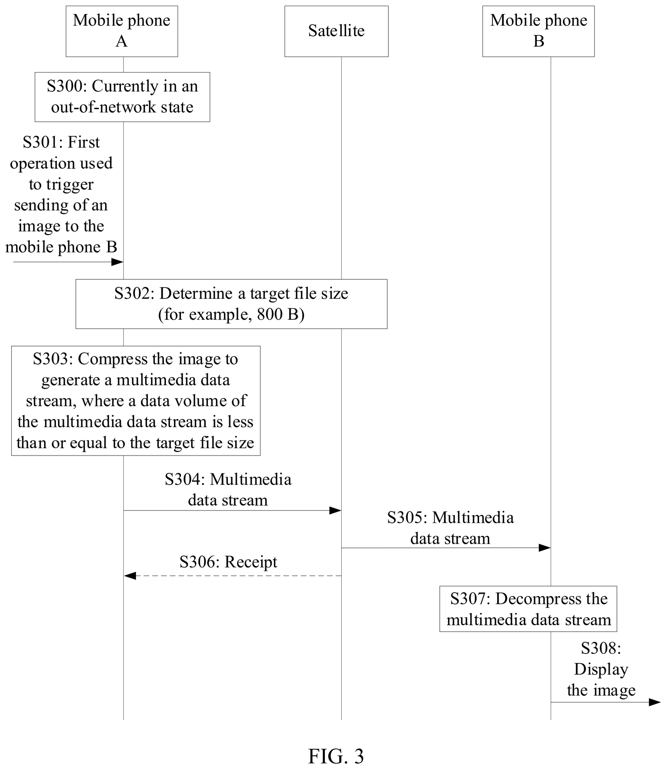

FIG. 3 is a schematic flowchart of a multimedia transmission method according to an embodiment of this application. The method may be applied to the communication system in FIG. 1, and may be further applied to the scenarios in FIG. 2A(a) to FIG. 2B(c). As shown in FIG. 3, the procedure may include the following steps.

S300: The mobile phone A is currently in an out-of-network state. For details about the out-of-network state, refer to the foregoing descriptions.

S301: The mobile phone A receives a first operation, where the first operation is used to trigger sending of an image to the mobile phone B. FIG. 2A(d) is used as an example. The first operation may be an operation (for example, a tap operation) on a Send button.

S302: The mobile phone A determines a target file size.

For example, the target file size may be 1 KB, 800 B, 600 B, or the like. A specific value is not limited in embodiments of this application. The target file size indicates that multimedia sent to the satellite needs to be compressed to a size less than or equal to the target file size.

In some embodiments, the target file size is preconfigured. For example, the target file size is stored in the mobile phone A before delivery. Alternatively, the target file size is specified in a communication protocol between the mobile phone A and the satellite. Alternatively, the target file size may be indicated by the satellite to the mobile phone A. For example, the satellite sends configuration information to the mobile phone A, where the configuration information includes the target file size.

In some examples, different types of multimedia may have different target file sizes. For example, when the multimedia is an image, the target file size is 800 B; or when the multimedia is a video, the target file size is 1 KB.

S303: The mobile phone A compresses the image to generate a multimedia data stream, where a data volume of the multimedia data stream is less than or equal to the target file size.

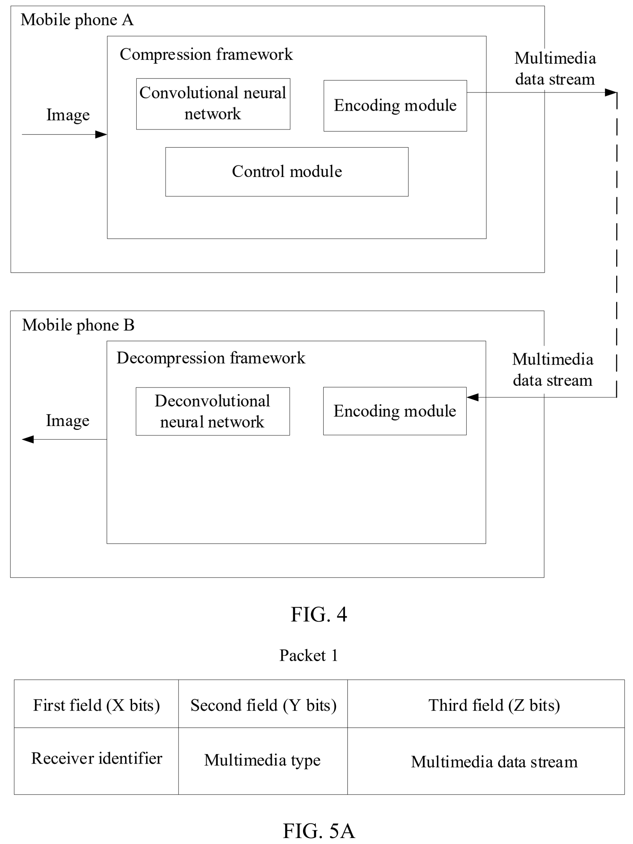

Optionally, the image is compressed in a plurality of manners, for example, may be compressed in an encoding scheme. Optionally, the encoding scheme may include lossy encoding, lossless encoding, orthogonal transform encoding, and the like. This is not limited in embodiments of this application. Alternatively, the image may be compressed through feature extraction. Optionally, feature extraction may be implemented by using a convolutional neural network. Details are not described in this embodiment of this application. For example, with reference to FIG. 4, the mobile phone A includes a compression framework, and the compression framework is configured to compress the multimedia (for example, an image) to the target file size. For example, the compression framework includes the convolutional neural network, an encoding module, and a control module. When an image is input into the compression framework, the convolutional neural network extracts feature information from the image, and the encoding module encodes the extracted feature information. Specifically, the encoding module may encode the feature information into a multimedia data stream based on a target file size provided by the control module. A data volume of the multimedia data stream is less than or equal to the target file size. In other words, regardless of a data volume of multimedia input to the compression framework, a data volume of a multimedia data stream output by the compression framework is less than or equal to the target file size (for example, 800 B).

S304: The mobile phone A sends the multimedia data stream to the satellite.

In some examples, the mobile phone A may send the multimedia data stream to the satellite at a time. For example, when the satellite has sufficient bandwidth, the multimedia data stream may be sent to the satellite.

In some other examples, the multimedia data stream may be sent a plurality of times. For example, the multimedia data stream may be split into N data packets, where N is an integer greater than or equal to 2, and each data packet includes a segment of the multimedia data stream. The N data packets are sent N times. Optionally, the quantity N of data packets obtained by splitting the multimedia data stream may be determined based on a transmission bandwidth of the satellite. For example, if a total data volume of the multimedia data stream is 800 B and the transmission bandwidth is 100 B, the multimedia data stream is split into eight data packets.

In some examples, a sending sequence of the eight data packets may be determined based on a priority relationship between the eight data packets. For example, all the data packets correspond to different feature information of the image, and the priority relationship between the data packets may be determined based on priorities of feature information corresponding to the data packets. For example, in the eight data packets, a data packet 1 to a data packet 4 correspond to feature information 1 of the image, and a data packet 5 to a data packet 8 correspond to feature information 2 of the image. If a priority of the feature information 1 is higher than that of the feature information 2, the data packet 1 to the data packet 4 are preferentially sent (a sending sequence of the four data packets is not limited), and the data packet 5 to the data packet 8 are sent later (a sending sequence of the four data packets is not limited).

Optionally, that the priority of the feature information 1 is higher than that of the feature information 2 may include: The feature information 1 describes an edge contour of an object in the image, and the feature information 2 describes details of the object in the image, where the details may include a color, brightness, and the like of the object. In this manner, because the data packet 1 to the data packet 4 are preferentially sent, after receiving the data packet 1 to the data packet 4, a peer end (that is, the mobile phone B) may restore an approximate contour of the object in the image based on the feature information 1. In this way, even if the data packet 5 to the data packet 4 fail to be sent, the peer end (that is, the mobile phone B) may also learn of general content of the image. Certainly, if the data packet 5 to the data packet 4 are successfully sent, the peer end (that is, the mobile phone B) may add details to the image based on the feature information 2, to improve definition of the image.

Optionally, that the priority of the feature information 1 is higher than that of the feature information 2 may include: The feature information 1 describes an object 1 in the image, and the feature information 2 describes an object 2 in the image, where a priority of the object 1 is higher than that of the object 2. In this manner, because the data packet 1 to the data packet 4 are preferentially sent, after receiving the data packet 1 to the data packet 4, a peer end (that is, the mobile phone B) may restore the object 1 in the image based on the four data packets. In this way, even if the data packet 5 to the data packet 4 fail to be sent, the peer end (that is, the mobile phone B) may also learn of that the image includes the object 1. Certainly, if the data packet 5 to the data packet 4 are successfully sent, the peer end (that is, the mobile phone B) may restore the object 2 based on the four data packets, to improve integrity of the image. Optionally, that the priority of the object 1 is higher than that of the object 2 may include at least one of the following: The object 1 is a foreground object and the object 2 is a background object; the object 1 is a person and the object 2 is not a person; a size occupied by the object 1 in the image is larger than a size occupied by the object 2 in the image; the object 1 is in a middle location of the image and a location of the object 2 in the image is close to an edge; or the like.

In the foregoing example, the multimedia data stream is split into eight data packets for sending separately. In some examples, specific duration is required to completely send the eight data packets. To ensure that the mobile phone A maintains communication with the satellite within the duration, every four data packets are classified into one group, and after receiving one group of data packets, the satellite may return a receipt to the mobile phone A, to indicate that the mobile phone A is currently in communication with the satellite. For example, after completely sending one group of data packets, the mobile phone A may wait for a receipt from the satellite. If the mobile phone A receives the receipt, the mobile phone A continues to send a next group of data packets. If the mobile phone A does not receive the receipt, the mobile phone A determines that communication with the satellite is interrupted, and may not need to continue to send a next group of data packets or resend a previous group of data packets. It should be noted that although four data packets are classified into one group in the preceding example, more or fewer data packets may be classified into one group. A quantity of data packets in each group may be pre-configured, for example, may be protocol-specified or indicated by a base station. This is not limited in embodiments of this application.

S305: The satellite sends the multimedia data stream to the mobile phone B.

S306: The satellite sends a receipt to the mobile phone A, where the receipt indicates that the multimedia data stream is successfully sent.

Optionally, S306 may be performed or not performed. This is not limited in embodiments of this application.

S307: The mobile phone B decompresses the multimedia data stream to obtain the multimedia.

For example, with reference to FIG. 4, the mobile phone B includes a decompression module, configured to decompress a multimedia data stream. The decompression module includes a deconvolutional neural network and a decoding module. The decoding module is configured to decode the multimedia data stream to obtain feature information of the image, and then the deconvolutional neural network processes the feature information to obtain the image.

S308: The mobile phone B displays the image.

Optionally, an execution sequence of S306, S307, and S308 is not limited in embodiments of this application.

As mentioned above, the multimedia data stream may be sent at a time or sent in a plurality of times. An example is used in which the multimedia data stream is sent at a time. The multimedia data stream may be carried in one packet for sending. A packet 1 is used as an example. Optionally, in addition to the multimedia data stream, the packet 1 may include at least one of the following information:

(1) First indication information, indicating a type of the multimedia. For example, when the first indication information is 00, it indicates that the multimedia is an image; when the first indication information is 01, it indicates that the multimedia is a video; or when the first indication information is 10, it indicates that the multimedia is a sticker.

(2) Second indication information, indicating a size of the multimedia. The size may include a dimension and/or a length. For example, the multimedia is an image. In this case, a size of the image may include a dimension of the image, for example, a height H and a width W of the image. For example, the multimedia is a video. In this case, a size of the video may include a dimension of the video, for example, a height H and a width W of the image, and may further include a length of the video, for example, duration of the video. For example, the multimedia is an audio. In this case, a size of the audio may include a length of the audio, for example, duration of the audio.

(3) Third indication information, indicating an identifier of a receiver (that is, the mobile phone B). Optionally, the identifier of the receiver may include a number (for example, a phone number) of the receiver. Optionally, the identifier of the receiver may further include a quantity of receivers. FIG. 2A(c) is used as an example. The user A may select one or more recipients on an interface in FIG. 2A(c). If one recipient is selected, the quantity of receivers is 1 and the number is a phone number of the recipient.

(4) Fourth indication information, indicating an identifier of a sender (that is, the mobile phone A). Optionally, the identifier of the sender may include a number (for example, a phone number) of the sender.

In an example, FIG. 5A is a diagram of the packet 1. As shown in FIG. 5A, the packet 1 includes three fields. The first field occupies X bits and includes third indication information, for example, the third indication information indicating the identifier of the receiver. The second field occupies Y bits and includes first indication information, for example, the first indication information indicating the type of the multimedia. The third field occupies Z bits and includes a multimedia data stream. It should be noted that, in actual application, the packet 1 may include more or fewer fields than those in FIG. 5A. This is not limited in embodiments of this application. In addition, an example in which the identifier of the receiver is located in the front field, the type of the multimedia is located in the middle field, and the multimedia data stream is located in the back field in the packet 1 in FIG. 5A. In an actual application, another layout may be used. For example, the identifier of the receiver is located in the front field, the multimedia data stream is located in the middle field, and the type of the multimedia is located in the back field; and the like.

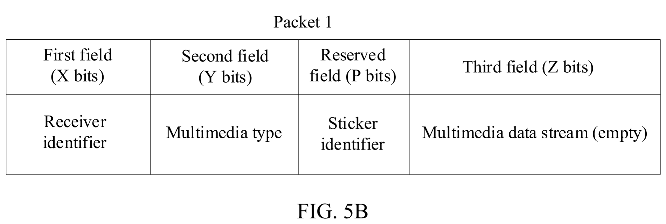

The multimedia sent by the mobile phone A to the satellite may alternatively be a sticker, an animated image, or the like. For example, the multimedia sent by the mobile phone A to the satellite is a sticker. To improve transmission efficiency, a possible case is that some stickers are pre-stored in the satellite, and if the mobile phone A needs to send a sticker to the satellite, the mobile phone A needs to send only an identifier of the sticker to the satellite, without a need to send multimedia such as the sticker, thereby greatly reducing a transmission amount. Therefore, in another example, FIG. 5B is another diagram of the packet 1. FIG. 5B is different from FIG. 5A as follows: In FIG. 5B, the packet 1 includes a reserved field of P bits. The reserved field is used to send special multimedia (such as a sticker or an animated image). FIG. 2A(c) is used as an example. Stickers may be displayed on an interface in FIG. 2A(c) or may be pre-stored in the satellite. If the user selects one package from the stickers, the mobile phone A may send an identifier of the sticker to the satellite. In this case, a type of multimedia in the second field in the packet 1 in FIG. 5B may be 10, which is used to indicate that the multimedia is a sticker. The reserved field in the packet 1 may be an identifier of the sticker. It should be understood that, in this case, a multimedia data stream in a third field in the packet 1 is empty, because no sticker needs to be transmitted.

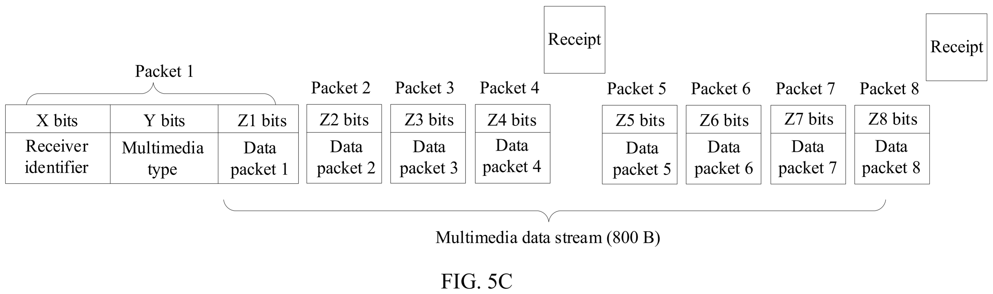

For example, the multimedia data stream is split into N data packets and sent in N times. Each data packet is carried in an independent packet for sending, that is, the N data packets are sent by using the N packets. For example, N=8, that is, the multimedia data stream is split into eight data packets. With reference to FIG. 5C, the mobile phone A sequentially sends eight packets to the satellite, which are respectively a packet 1 to a packet 8. The packet 1 includes a data packet 1, the packet 2 includes a data packet 2, and so on. As shown in FIG. 5C, because the packet 1 includes indication information such as an identifier of a receiver and a type of multimedia, the packet 2 to the packet 8 may not include the indication information, to reduce a transmission amount.

In FIG. 2A(d), the user selects an image 1000, the mobile phone A compresses the image 1000 into a multimedia data stream and sends the multimedia data stream to the mobile phone B, and the mobile phone B obtains an image 1300 through decompression, as shown in FIG. 2B(c). In FIG. 2B(c), all areas of the image 1300 have the same definition. A reason is as follows: In FIG. 2A(d), when receiving an operation on a Send button, the mobile phone A compresses all areas of the image 1000 at a same compression ratio to obtain a multimedia data stream, so that all the areas of the image 1300 obtained by the mobile phone B by decompressing the multimedia data stream have the same definition.

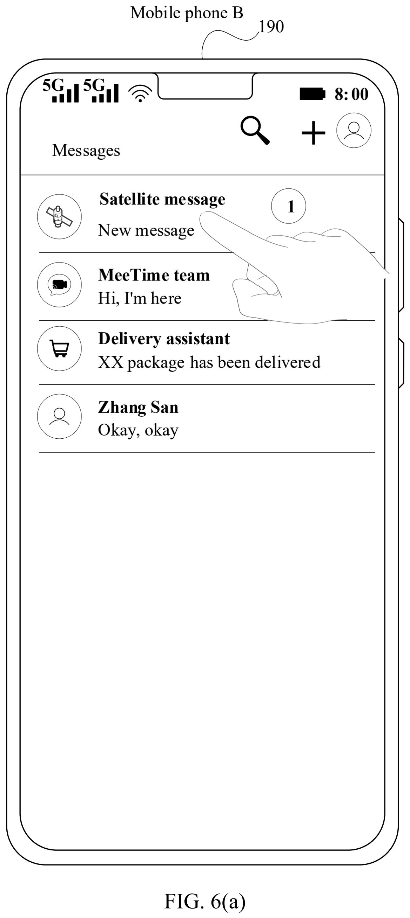

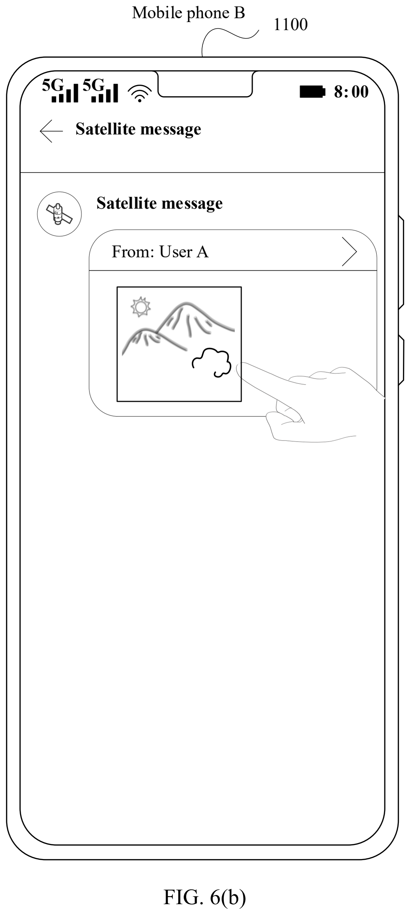

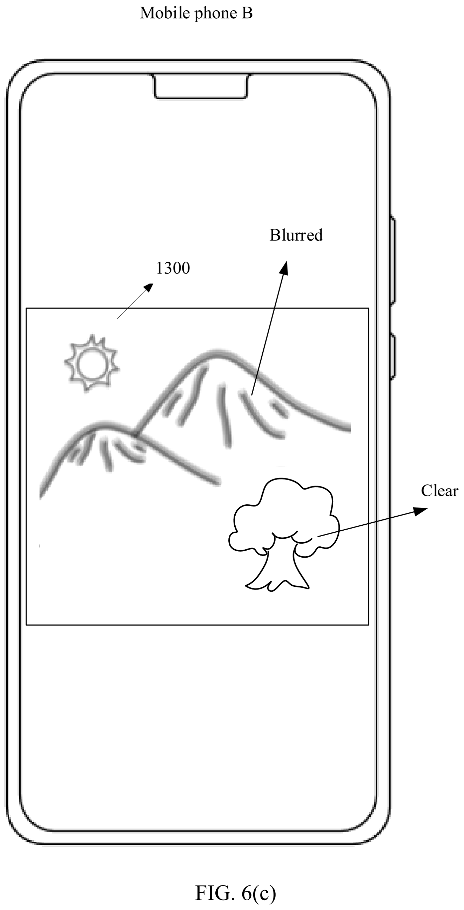

In some other examples, in FIG. 2A(d), when receiving an operation on a Send button, the mobile phone A compresses all areas of the image 1000 at different compression ratios to obtain a multimedia data stream, so that all the areas of the image 1300 obtained by the mobile phone B by decompressing the multimedia data stream have different definition. For example, FIG. 6(a) shows an interface of an instant messaging application (for example, Huawei MeeTime) in the mobile phone B, where a Satellite message option is displayed on the interface. When receiving an operation on the Satellite message option, the mobile phone B may display an interface in FIG. 6(b), where the interface includes a thumbnail (or referred to as a preview image) of an image sent by the mobile phone A. When receiving an operation on the thumbnail, the mobile phone B may display an interface in FIG. 6(c), where the interface includes the image 1300 sent by the mobile phone A. Different areas of the image 1300 have different definition.

As mentioned in the foregoing example, in FIG. 2A(d), when receiving the operation on the Send button, the mobile phone A compresses all the area of the image 1000 at the different compression ratios to obtain the multimedia data stream. It may be understood that, before the areas of the image 1000 are compressed at the different compression ratios, the image 1000 may be first divided into the different areas. Optionally, area division may be automatic division by the mobile phone A, or may be manual division by the user.

The automatic division is used as an example. To be specific, in FIG. 2A(d), after receiving the operation on the Send button, the mobile phone A automatically divides the image 1000 into different areas, and then compresses the different areas at different compression ratios and sends the compressed areas to the mobile phone B. For example, the mobile phone A may automatically identify a target object in the image 1000, and then classify an area in which the target object is located and an area in which another object is located into different areas. The target object may be an object in a middle location of the image 1000, an object with a large size, an object with a high priority, or the like. Optionally, the mobile phone A may store a priority relationship between different objects, and the priority relationship includes, for example, a person>an animal>a plant. When determining that the image includes a plurality of objects, the mobile phone A may determine, based on the priority relationship, which object has a highest priority.

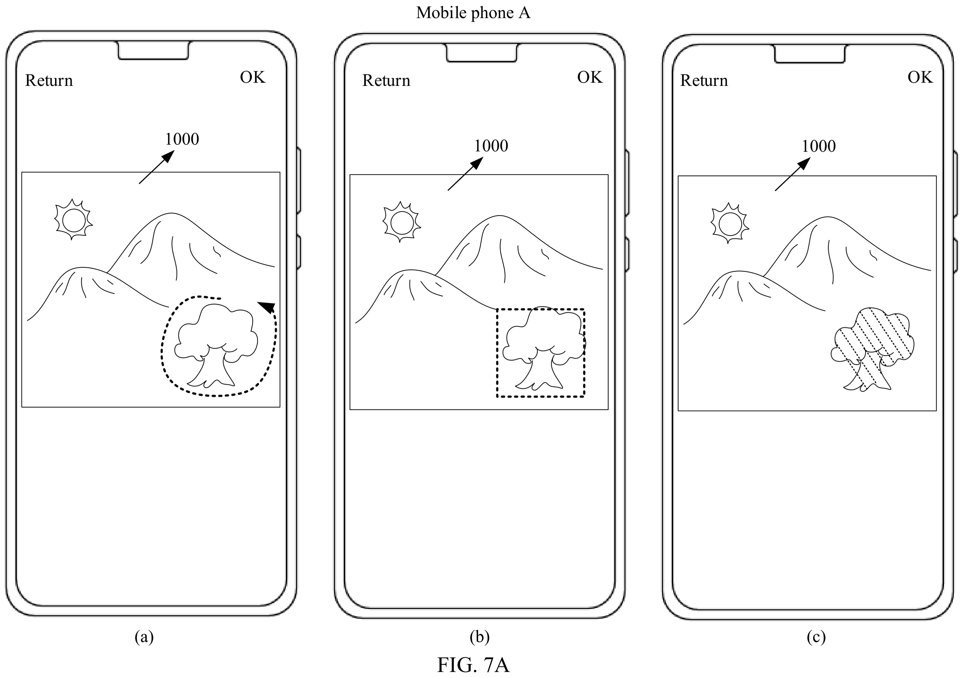

The manual division by the user is used as an example below. FIG. 2A(d) continues to be used as an example. When receiving an operation (for example, a double-tap operation) on the first thumbnail, the mobile phone A may display an interface in (a) in FIG. 7A, where the interface includes the image 1000. The user may manually divide the image 1000 into areas. For example, in (a) in FIG. 7A, after receiving a circle drawing operation (represented by a dashed line in the figure), the mobile phone A classifies an area inside a circle and an area outside the circle into different areas. Optionally, if the mobile phone receives an operation on an OK option, the mobile phone may return to an interface in FIG. 2A(d). After the user taps the Send button on the interface, the mobile phone compresses, at different compression ratios, areas obtained through division by the user, and then sends the compressed areas to the mobile phone B. In (a) in FIG. 7A, if receiving an operation on a Return button, the mobile phone may re-perform area division.

Alternatively, FIG. 2A(d) continues to be used as an example. When receiving an operation (for example, a double-tap operation) on the first thumbnail, the mobile phone A may display an interface in (b) in FIG. 7A, where the interface includes the image 1000, and the image 1000 includes a dashed-line box (that is, the dashed-line box automatically appears). An area in the dashed-line box and an area outside the dashed-line box are classified into different areas. Optionally, the dashed-line box may be in a middle location or any location of the image. Alternatively, the mobile phone A may identify a target object, and then display a dashed-line box at a location of the target object. For details about how to identify a target object, refer to the foregoing descriptions. It may be understood that, after the dashed-line box automatically appears, an area enclosed by the dashed-line box does not necessarily meet a user requirement; in this case, the user may further adjust a location, a size, and the like of the dashed-line box, to re-perform area division.

FIG. 2A(d) continues to be used as an example. When receiving an operation (for example, a double-tap operation) on the first thumbnail, the mobile phone A may display an interface in (c) in FIG. 7A, where the interface includes the image 1000, and oblique lines (a color or the like) filled in an area in which a target object (for example, a tree) is located in the image 1000 indicates that the target object and another object are compressed at different compression ratios. Certainly, the user may change the target object. For example, in (c) in FIG. 7A, the mobile phone A receives a tap operation of the user on the image 1000, and determines that the tap operation is located in an area of an object "Sun". In this case, the target object is changed to "Sun", and the area of the Sun is filled with oblique lines, indicating that the Sun and another object are compressed at different compression ratios.

The foregoing provides several manners of performing area division on the image. It may be understood that there may be another division manner. Examples are not enumerated in this embodiment of this application.

(b) in FIG. 7A is used as an example. The mobile phone A divides the image 1000 into two areas. In this embodiment of this application, the mobile phone A may perform differentiated compression on the two areas to obtain a multimedia data stream, so that different areas of an image obtained by the mobile phone B by decompressing the multimedia data stream have different definition. The following describes a process of performing differentiated compression on the two areas in (b) in FIG. 7A.

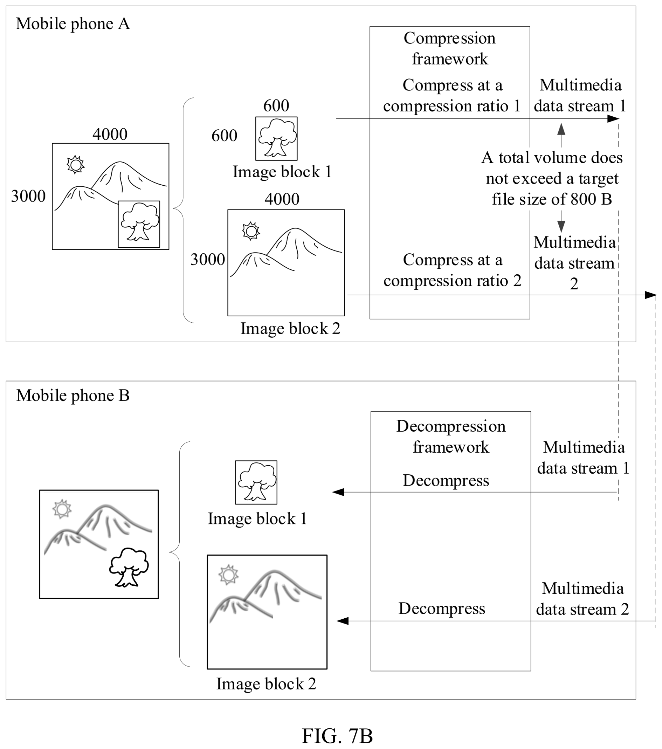

For example, with reference to FIG. 7B, the image 1000 is segmented into two image blocks: an image block 1 and an image block 2. The mobile phone A compresses the image block 1 at a compression ratio 1 to obtain a multimedia data stream 1. The mobile phone A compresses the image block 2 at a compression ratio 2 to obtain a multimedia data stream 2. The compression ratio 2 is different from the compression ratio 1. For example, the compression ratio 2 is higher than the compression ratio 1. In addition, a total data volume of the multimedia data stream 1 and the multimedia data stream 2 is less than or equal to a target file size, for example, 800 B.

Still as shown in FIG. 7B, after receiving the multimedia data stream 1 and the multimedia data stream 2, the mobile phone B may separately decompress the multimedia data stream 1 and the multimedia data stream 2 to obtain two image blocks, namely, the image block 1 and the image block 2. The mobile phone B combines the two image blocks into one image, and different areas of the image have different definition. It may be understood that when the mobile phone B combines two image blocks into one image, a location relationship between the two image blocks needs to be used. In a possible manner, the mobile phone A sends the location relationship between the two image blocks to the mobile phone B. Optionally, the location relationship may be located in any field in the foregoing packet 1. This is not limited in embodiments of this application.

In the foregoing embodiment, different compression ratios are used for different areas. For example, in FIG. 7B, the image block 1 is compressed at the compression ratio 1, and the image block 2 is compressed at the compression ratio 2. In some examples, the mobile phone A may set different compression ratios for different areas, provided that it is ensured that different areas of a compressed image have different definition, and a data volume of the compressed image does not exceed a target file size. For example, in FIG. 7B, the mobile phone A may set a low compression ratio for the image block 1 and a high compression ratio for the image block 2, so that the image block 1 in the image obtained by the mobile phone B is more clear.

In some other examples, compression ratios of different areas may be manually set by the user.

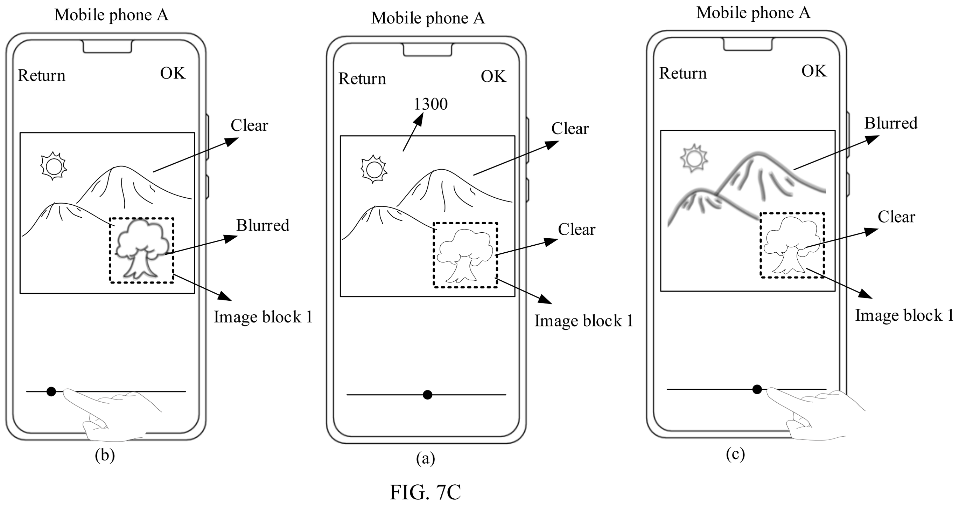

For example, FIG. 2A(d) continues to be used as an example. When receiving an operation (for example, a double-tap operation) on the first thumbnail, the mobile phone A may display an interface in (a) in FIG. 7C, where the image 1300 is displayed on the interface. The image 1300 is an image obtained by compressing all areas of the image 1000 at a same compression ratio. Therefore, all the areas of the image 1300 have same definition. The mobile phone A further displays a progress bar, and the progress bar includes an icon (for example, a black dot). By default, the icon is in a middle location of the progress bar, indicating that all areas of the image have the same definition, that is, all the areas have the same compression ratio.

For ease of understanding, it is assumed that a total original file size of an original image, namely, the image 1000, is 20 M, an original file size of the image block 1 is 5 M, and an original file size of the image block 2 is 15 M.

In (a) in FIG. 7C, the compression ratio 1 of the image block 1 may be 5M/X, where X indicates a file size of the compressed image block 1.

In (a) in FIG. 7C, the compression ratio 2 of the image block 2 may be 15M/Y, where Y indicates a file size obtained by compressing the image block 2, and X+Y is equal to a target file size (for example, 800 B). Therefore, a total file size of the two compressed image blocks does not exceed the target file size.

In (a) in FIG. 7C, after the user drags the icon to the left, as shown in (b) in FIG. 7C, the compression ratio 1 of the image block 1 is increased, and the compression ratio 2 of the image block 2 is reduced. Therefore, the image block 1 is blurrier than the image block 2.

In (b) in FIG. 7C, the compression ratio 1 of the image block 1 may be 5M/X', where X' indicates a file size of the compressed image block 1. X' is less than X in (a) in FIG. 7C. It may be understood as follows: The target file size is 800 B in total, a file size X allocated to the image block 1 is reduced, and the compression ratio 1 is increased. Therefore, the image block 1 is blurrier than that in (a) in FIG. 7C.

In (b) in FIG. 7C, the compression ratio 2 of the image block 2 may be 15M/Y', where Y' indicates a file size of the compressed image block 2. Y' is greater than Y in (a) in FIG. 7C. A reason is as follows: The target file size is 800 B in total, the file size X allocated to the image block 1 is reduced, and a file size Y allocated to the image block 2 is increased. Therefore, the compression ratio 2 is reduced, and the image block 2 is clearer than that in (a) in FIG. 7C. X'+Y' is equal to the target file size (for example, 800 B), that is, a file size of two compressed image blocks does not exceed the target file size.

It may be understood that, in (b) in FIG. 7C, if the mobile phone receives an operation on an OK option, the mobile phone may return to an interface in FIG. 2A(d). After the user taps the Send button on the interface, the mobile phone compresses, at different compression ratios, areas obtained through division by the user, and then sends the compressed areas to the mobile phone B. In this way, the image block 1 of the image obtained by the mobile phone B is blurred, and the image block 2 is clear.

In (a) in FIG. 7C, after the user drags the icon to the right, as shown in (c) in FIG. 7C, the compression ratio 1 of the image block 1 is reduced, and the compression ratio 2 of the image block 2 is increased. Therefore, the image block 1 is clear and the image block 2 is blurred.

In (c) in FIG. 7C, the compression ratio 1 of the image block 1 may be 5M/X", where X" indicates a file size of the compressed image block 1. X" is greater than X in (a) in FIG. 7C. It may be understood as follows: The target file size is 800 B in total, a file size X allocated to the image block 1 is increased, and the compression ratio 1 is reduced. Therefore, the image block 1 is clearer than that in (a) in FIG. 7C.

In (c) in FIG. 7C, the compression ratio 2 of the image block 2 may be 15M/Y", where Y" indicates a file size of the compressed image block 2. Y" is less than Y in (a) in FIG. 7C. A reason is as follows: The target file size is 800 B in total, the file size X allocated to the image block 1 is increased, and a file size Y allocated to the image block 2 is reduced. Therefore, the compression ratio 2 is increased, and the image block 2 is blurrier than that in (a) in FIG. 7C. X"+Y" is equal to the target file size (for example, 800 B), that is, a file size of two compressed image blocks does not exceed the target file size.

It may be understood that, in (c) in FIG. 7C, if the mobile phone receives an operation on an OK option, the mobile phone may return to an interface in FIG. 2A(d). After the user taps the Send button on the interface, the mobile phone compresses, at different compression ratios, areas obtained through division by the user, and then sends the compressed areas to the mobile phone B. In this way, the image block 1 of the image obtained by the mobile phone B is clear, and the image block 2 is blurred.

In the foregoing embodiment, the compression ratio 1 of the image block 1 is described by using a ratio of the original file size of the image block 1 to the file size of the compressed image block 1. The compression ratio 2 of the image block 2 is described by using a ratio of the original file size of the image block 2 to the file size of the compressed image block 2. In some other examples, the compression ratio 1 of the image block 1 may alternatively be described by using a ratio of original resolution of the image block 1 to resolution of the compressed image block 1. Similarly, the compression ratio 2 of the image block 2 may alternatively be described by using a ratio of original resolution of the image block 2 to resolution of the compressed image block 2.

For ease of understanding, it is assumed that original resolution of the original image, namely, the image 1000, is H*W, where the original resolution of the image block 1 is H1*W1, and the original resolution of the image block 2 is H2*W2.

In (a) in FIG. 7C, the compression ratio 1 of the image block 1 may include:

$$H1/H1' = 1/\sqrt{\frac{H3 * W3 * a}{H1 * W1}},$$

and

$$W1/W1' = 1/\sqrt{\frac{H3 * W3 * a}{H1 * W1}}.$$

H1 and W1 indicate an original height and an original width of the image block 1 respectively. H1' and W1' indicate a height and a width of the compressed image block 1. $H1/H1'$ indicates a compression ratio of the image block 1 in terms of height, and $W1/W1'$ indicates a compression ratio of the image block 1 in terms of width. H3 and W3 indicate target sizes, for example, 240*180, and may be determined in advance. a=file size a/target file size, where the file size a indicates the file size of the compressed image block 1.

In (b) in FIG. 7C, the compression ratio 2 of the image block 2 may meet:

$$H2/H2' = 1/\sqrt{\frac{H3 * W3 * b}{H2 * W2}},$$

and

$$W2/W2' = 1/\sqrt{\frac{H3 * W3 * b}{H2 * W2}}.$$

H2 and W2 indicate an original height and an original width of the image block 2 respectively. $H2'$ and $W2'$ indicate a height and a width of the compressed image block 2. $H2/H2'$ indicates a compression ratio of the image block 2 in height, and $W2/W2'$ indicates a compression ratio of the image block 2 in width. H3 and W3 indicate target sizes, for example, 240*180. b=file size b/target file size, where the file size b indicates the file size of the compressed image block 2. File size a+File size b=Target file size.

In (a) in FIG. 7C, after the user drags the icon to the left, the compression ratio 1 of the image block 1 is increased, and the compression ratio 2 of the image block 2 is reduced. Therefore, in a process of moving the icon to the left, the image block 1 gradually becomes blurred, and the image block 2 gradually becomes clear, as shown in (b) in FIG. 7C. The implementation principles include (1) and (2).

(1) In (b) in FIG. 7C, the compression ratio 1 of the image block 1 meets:

$$H1/H1' = 1/\sqrt{\dfrac{H3*W3*a'}{H1*W1}},$$

and

$$W1/W1' = 1/\sqrt{\dfrac{H3*W3*a'}{H1*W1}}.$$

*a'* is less than a in (a) in FIG. 7C. To be specific, the target file size is 800 B in total. Because a file size allocated to the image block 1 is reduced, *a'* is reduced, and correspondingly the compression ratio 1 is increased. For example, the compression ratio $H1/H1'$ of the image block 1 in height and the compression ratio $W1/W1'$ of the image block 1 in width are both increased, and therefore $H1'$ and $W1'$ are reduced, and resolution of the image block 1 is reduced compared with that in (a) in FIG. 7C, that is, definition is reduced.

(2) In (b) in FIG. 7C, the compression ratio 2 of the image block 2 may meet:

$$H2/H2' = 1/\sqrt{\dfrac{H3*W3*b'}{H2*W2}},$$

and

$$W2/W2' = 1/\sqrt{\dfrac{H3*W3*b'}{H2*W2}}.$$

*b'* is greater than b in (a) in FIG. 7C. To be specific, the target file size is 800 B in total. Because a file size allocated to the image block 1 is reduced, a file size allocated to the image block 2 is increased, and correspondingly *b'* is increased and the compression ratio 2 is reduced. For example, the compression ratio $H2/H2'$ of the image block 2 in height and the compression ratio $W2/W2'$ in width are both reduced, and therefore $H2'$ and $W2'$ are increased, that is, resolution of the image block 2 is increased compared with that (a) in FIG. 7C, that is, definition is improved.

In (a) in FIG. 7C, after the user drags the icon to the right, the compression ratio 1 of the image block 1 is reduced, and the compression ratio 2 of the image block 2 is improved. Therefore, in a process of moving the icon to the right, the image block 1 gradually becomes clear, and the image block 2 gradually becomes blurred, as shown in (c) in FIG. 7C. The implementation principles include (3) and (4).

(3) In (c) in FIG. 7C, the compression ratio 1 of the image block 1 meets:

$$H1/H1' = 1/\sqrt{\dfrac{H3*W3*a''}{H1*W1}},$$

and

$$W1/W1' = 1/\sqrt{\dfrac{H3*W3*a''}{H1*W1}}.$$

*a"* is greater than a in (a) in FIG. 7C. To be specific, the target file size is 800 B in total. Because a file size allocated to the image block 1 is increased, *a"* is increased, and correspondingly the compression ratio 1 is reduced. For example, the compression ratio $H1/H1'$ of the image block 1 in height and the compression ratio $W1/W1'$ of the image block 1 in width are both reduced, and therefore $H1'$ and $W1'$ are increased, and resolution of the image block 1 is increased compared with that in (a) in FIG. 7C, that is, definition is improved.

(4) In (c) in FIG. 7C, the compression ratio 2 of the image block 2 may meet:

$$H2/H2' = 1/\sqrt{\dfrac{H3*W3*b''}{H2*W2}},$$

and

$$W2/W2' = 1/\sqrt{\dfrac{H3*W3*b''}{H2*W2}}.$$

*b"* is less than b in (a) in FIG. 7C. To be specific, the target file size is 800 B in total. Because a file size allocated to the image block 1 is increased, a file size allocated to the image block 2 is reduced, and correspondingly *b"* is reduced and the compression ratio 2 is increased. For example, the compression ratio $H2/H2'$ of the image block 2 in height and the compression ratio $W2/W2'$ in width are both increased, and therefore $H2'$ and $W2'$ are reduced, that is, resolution of the image block 2 is reduced compared with that (a) in FIG. 7C, that is, definition is reduced.

It should be noted that FIG. 7C is an example of manually setting compression ratios for different areas of an image. In an actual application, compression ratios of different areas may be manually set in another manner. This is not limited in embodiments of this application.

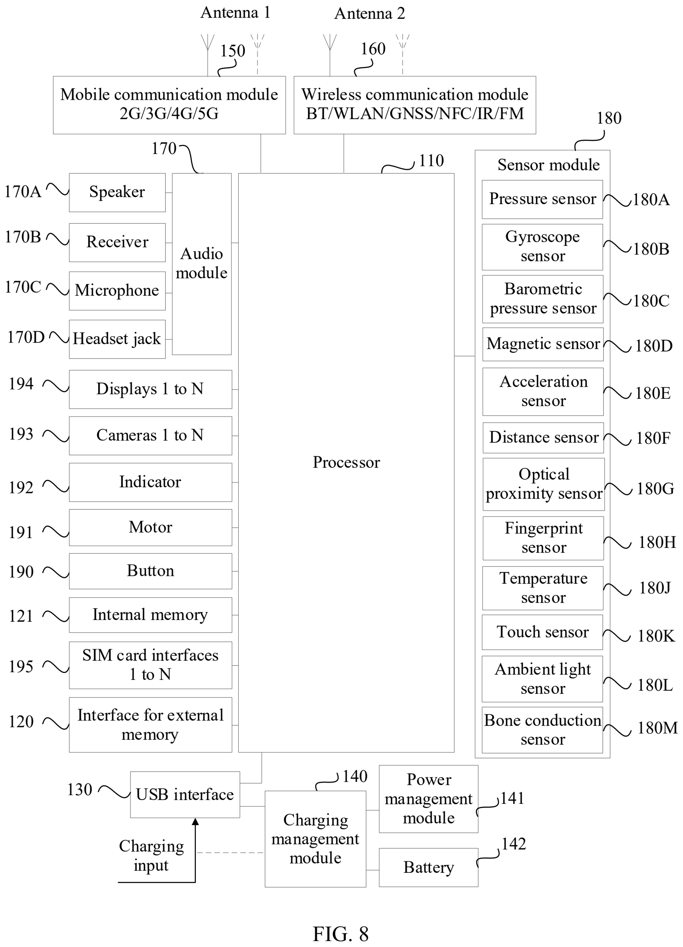

FIG. 8 is a diagram of a structure of an electronic device according to an embodiment of this application. The electronic device may be the first device (for example, a mobile phone A) or the second device (for example, a mobile phone B). As shown in FIG. 8, the electronic device may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device. The controller may generate an operation control signal based on instruction operation code and a time sequence signal, to complete control of instruction reading and instruction execution. The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110 may perform a shortcut display method provided in embodiments of this application. For example, the processor 110 may display a first interface on the display 194, where the first interface includes N areas, and N is a positive integer. The N areas respectively correspond to N applications in the electronic device. A first area in the N areas includes at least one shortcut of the first application. The first area is any one of the N areas. The first application is an application that is in the N applications and that corresponds to the first area. The at least one shortcut is used to open at least one function or interface of the first application. A shortcut in the first area and a shortcut in another area (an area other than the first area in the N areas) are independent of and irrelevant to each other.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The GPIO interface may be configured by software. The GPIO interface may be configured for a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to exchange data between the electronic device 100 and a peripheral device, or may be configured to connect to a headset for playing audio through the headset. The interface may be further configured to connect to another electronic device, for example, an AR device.

It may be understood that an interface connection relationship between the modules that is illustrated in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

A wireless communication function of the electronic device may be implemented through the antenna 1, the antenna 2, the mobile communication module 150, the wireless communication module 160, the modem processor, the baseband processor, and the like. The antenna 1 and the antenna 2 are configured to: transmit and receive an electromagnetic wave signal. Each antenna of the electronic device may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The wireless communication module 160 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology.

The display 194 is configured to display a display interface of an application, and the like. The display 194 includes a display panel. In some embodiments, the electronic device may include one or N displays 194, where N is a positive integer greater than 1.

The electronic device 100 may implement a photographing function through the ISP, the camera 193, the video codec, the GPU, the display 194, the application processor, and the like. The ISP is configured to process data fed back by the camera 193.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage area and a data storage area. The program storage area may store an operating system, software code of at least one application, and the like. The data storage area may store data (for example, an image or a video) and the like that are created during use of the electronic device. In addition, the internal memory 121 may include a high-speed random access memory, or may include a nonvolatile memory, for example, at least one magnetic disk storage device, a flash storage device, or a universal flash storage.

The interface 120 for external memory may be configured to connect to an external memory card, for example, a micro SD card, to extend a storage capability of the electronic device. The external memory card communicates with the processor 110 through the interface 120 for external memory, to implement a data storage function. For example, files such as pictures or videos are stored in the external memory card.

The electronic device may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music by using one or more speakers 170A, or may be used in a speaker scenario, for example, answering a hands-free call.

The receiver 170B, also referred to as an "earpiece", is configured to convert an audio electrical signal into a sound signal, and there may be one or more receivers 170B. When a call is answered or speech information is received through the electronic device 100, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a motion gesture of the electronic device. In some embodiments, angular velocities of the electronic device around three axes (namely, axes x, y, and z) may be determined by using the gyroscope sensor 180B. The gyroscope sensor 180B may be configured to implement image stabilization during photographing.

The barometric pressure sensor 180C is configured to measure barometric pressure. In some embodiments, the electronic device calculates an altitude based on a barometric pressure value measured by the barometric pressure sensor 180C, to assist in positioning and navigation.

The magnetic sensor 180D includes a Hall effect sensor. The electronic device may detect opening and closing of a flip cover by using the magnetic sensor 180D.

The acceleration sensor 180E may detect accelerations in various directions (usually on three axes) of the electronic device. When the electronic device is still, a magnitude and a direction of gravity may be detected.

The distance sensor 180F is configured to measure a distance. The electronic device may measure the distance in an infrared manner or a laser manner.

The optical proximity sensor 180G may include, for example, a light-emitting diode (LED) and an optical detector, for example, a photodiode. The light-emitting diode may be an infrared light-emitting diode. The electronic device emits infrared light through the light-emitting diode. The electronic device detects infrared reflected light from a nearby object through the photodiode. When sufficient reflected light is detected, the electronic device may determine that there is an object near the electronic device. When insufficient reflected light is detected, the electronic device may determine that there is no object near the electronic device.

The ambient light sensor 180L is configured to sense ambient light brightness. The electronic device may adaptively adjust brightness of the display 194 based on the sensed ambient light brightness.

The fingerprint sensor 180H is configured to collect a fingerprint.

The temperature sensor 180J is configured to detect a temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button. The electronic device may receive a button input, and generate a button signal input related to a user setting and function control of the electronic device. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device.

It may be understood that components shown in FIG. 8 do not constitute a specific limitation on the electronic device. The electronic device in this embodiment of the present invention may include more or fewer components than those in FIG. 8. In addition, a combination/-connection relationship between the components in FIG. 8 may further be adjusted and modified.

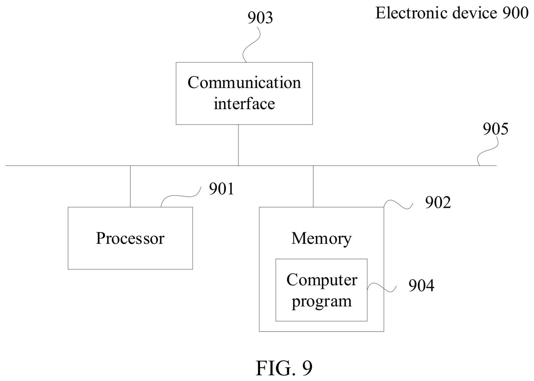

FIG. 9 is a diagram of a structure of an electronic device 900 according to an embodiment of this application. The electronic device 900 may be the first device (for example, a mobile phone A) or the second device (for example, a mobile phone B). As shown in FIG. 9, the electronic device 900 may include one or more processors 901, one or more memories 902, a communication interface 903, and one or more computer programs 904. The foregoing components may be connected through one or more communication buses 905. The one or more computer programs 904 are stored in the memory 902 and are configured to be executed by the one or more processors 901, and the one or more computer programs 904 include instructions. For example, when the electronic device 900 is the first device described above, the instructions may be used to perform related steps of the first device in the foregoing corresponding embodiment, for example, perform related steps of the first device in FIG. 3. For another example, when the electronic device 900 is the second device described above, the instructions may be used to perform related steps of the second device in the foregoing corresponding embodiment, for example, perform related steps of the second device in FIG. 3. The communication interface 903 is configured to implement communication between the electronic device 900 and another device. For example, the communication interface may be a transceiver.

In the foregoing embodiments provided in this application, the method provided in embodiments of this application is described from the perspective in which the electronic device (for example, the mobile phone) is used as an execution body. To implement functions in the foregoing method provided in embodiments of this application, the electronic device may include a hardware structure and/or a software module, and the foregoing functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, DVD), a semiconductor medium (for example, a solid state disk Solid State Disk (SSD)), or the like. In a case in which no conflict occurs, the solutions in the foregoing embodiments may be combined for use.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the protection scope defined by the following claims and their equivalent technologies.

**Claims**

1. A multimedia transmission method, applied to a first device, wherein the first device is in an out-of-network state, and the method comprises:

   receiving a first operation, wherein the first operation is used to trigger sending of multimedia to a second device; and
   sending N multimedia data streams to a satellite, wherein the N multimedia data streams are data streams obtained by compressing the multimedia, N is a positive integer, a data volume of each of the N multimedia data streams does not exceed a first threshold, the first threshold is less than or equal to a transmission bandwidth of the satellite, and a total data volume of the N multimedia data streams does not exceed a second threshold.

2. The method according to claim 1, wherein a first multimedia data stream in the N multimedia data streams is carried in a first packet for sending, the first multimedia data stream is one or more data streams in the N multimedia data streams, and the first packet further comprises at least one of the following:

   first indication information, indicating a type of the multimedia;
   second indication information, indicating a size of the multimedia;
   third indication information, indicating an identifier of the first device; and
   fourth indication information, indicating an identifier of the second device.

3. The method according to claim 1 or 2, wherein the multimedia comprises a first image, the N multimedia data streams respectively correspond to N pieces of feature information of the first image, and a sending sequence of the N multimedia data streams is determined based on a priority relationship between the N pieces of feature information.

4. The method according to claim 3, wherein the N multimedia data streams comprise a second multimedia data stream and a third multimedia data stream, when the following condition is met, a sending time of the second multimedia data stream is earlier than that of the third multimedia data stream, and the condition comprises:

   feature information corresponding to the second multimedia data stream describes an edge contour of an object in the first image, and feature information corresponding to the third multimedia data stream describes details of the object in the first image; or
feature information corresponding to the second multimedia data stream describes a first object in the first image, and feature information corresponding to the third multimedia data stream describes a second object in the first image, wherein a priority of the first object is higher than that of the second object.

5. The method according to any one of claims 1 to 4, wherein the multimedia is the first image, and the N multimedia data streams are data streams obtained by compressing different areas of the first image at different compression ratios, so that a second image is obtained by decompressing the N multimedia data streams, wherein different areas of the second image have different definition.

6. The method according to claim 5, wherein before receiving the first operation, the method further comprises:
receiving a second operation, wherein the second operation is used to set definition of the different areas of the first image.

7. The method according to claim 5 or 6, wherein the method further comprises:
displaying the second image.

8. The method according to claim 6, wherein the N multimedia data streams are data streams obtained by compressing a target area and a non-target area of the first image at different compression ratios, the target area comprises at least one of a user-specified area, an area in which a target object is located, and an area in a middle location, and the non-target area is an area other than the target area.

9. The method according to any one of claims 1 to 8, wherein the method further comprises:
receiving a returned message from the satellite, wherein the returned message indicates that the N multimedia data streams are successfully sent.

10. The method according to any one of claims 1 to 8, wherein sending the N multimedia data streams to the satellite comprises:

sending M multimedia data streams to the satellite, wherein the M multimedia data streams are one or more of the N multimedia data streams, and M is a positive integer; and
when receiving a returned message from the satellite, sending remaining N-M multimedia data streams to the satellite, wherein the returned message indicates that the M multimedia data streams are successfully sent.

11. A multimedia transmission method, applied to a second device, wherein the method comprises:

receiving N multimedia data streams sent via a satellite, wherein N is a positive integer, a data volume of each of the N multimedia data streams does not exceed a first threshold, the first threshold is less than or equal to a transmission bandwidth of the satellite, and a total data volume of the N multimedia data streams does not exceed a second threshold; and
obtaining multimedia based on the N multimedia data streams.

12. The method according to claim 11, wherein a first multimedia data stream in the N multimedia data streams is carried in a first packet, the first multimedia data stream is one or more data streams in the N multimedia data streams, and the first packet further comprises at least one of the following:

first indication information, indicating a type of the multimedia;
second indication information, indicating a size of the multimedia;
third indication information, indicating an identifier of the first device; and
fourth indication information, indicating an identifier of the second device.

13. The method according to claim 11 or 12, wherein the multimedia is a first image, and the method further comprises:
displaying the first image, wherein different areas of the first image have different definition.

14. The method according to claim 11 or 12, wherein obtaining the multimedia based on the N multimedia data streams comprises:

obtaining the first image based on a second multimedia data stream in the N multimedia data streams, wherein the first image comprises an edge contour of an object; and
obtaining a second image based on a third multimedia data stream in the N multimedia data streams and the first image, wherein the second image comprises details of the object, and a receiving time of the third multimedia data stream is later than that of the second multimedia data stream.

15. The method according to claim 11 or 12, wherein obtaining the multimedia based on the N multimedia data streams comprises:

obtaining the first image based on a second multimedia data stream in the N multimedia data streams, wherein the first image comprises a first object; and

obtaining a second image based on a third multimedia data stream in the N multimedia data streams and the first image, wherein the second image comprises the first object and a second object, and a receiving time of the third multimedia data stream is later than that of the second multimedia data stream.

16. An electronic device, comprising:

a processor, a memory, and one or more programs, wherein
the one or more programs are stored in the memory, the one or more programs comprise instructions, and when the instructions are executed by the processor, the electronic device is caused to perform steps of the method according to any one of claims 1 to 15.

17. A communication system, comprising a first device, a second device, and a satellite, wherein

the first device is configured to perform steps of the method according to any one of claims 1 to 10; and
the second device is configured to perform steps of the method according to any one of claims 11 to 15.

18. A computer-readable storage medium, wherein the computer-readable storage medium is configured to store a computer program, and when the computer program is run on a computer, the computer is caused to perform the method according to any one of claims 1 to 15.

Satellite

First device
(mobile phone A)

Second device
(mobile phone B)

FIG. 1

Mobile phone A

110

No service        8:00

Messages

**Satellite message**
Send or receive BeiDou satellite
messages through this service

**MeeTime team**
Hi, I'm here

**Delivery assistant**
XX package has
been delivered

**Li Si**
Okay, okay

**Wang Wu**
Hahaha

FIG. 2A(a)

Mobile phone A

120

FIG. 2A(b)

Mobile phone A

130

FIG. 2A(c)

Mobile phone A

140

No service  ▬ 8:00

Gallery

1000

Send

FIG. 2A(d)

Mobile phone A

150

Adjust an orientation of the mobile
phone to align with the satellite

No service

New message

8:00

FIG. 2A(e)

Mobile phone A

160

No service      8:00

←    New message

**Sending (15s)**

**Keep holding**

FIG. 2A(f)

Mobile phone A

170

FIG. 2A(g)

Mobile phone A

180

No service ▬ 8:00

← Satellite message

🛰 **Satellite message**

> **Usage**
>
> For emergency communication in areas without mobile data or WLAN coverage

🛰 **Satellite message**

> **Send to:**      User B     ＞
>
> Sent

╋ **New message**      ⋮ **Learn more**

FIG. 2A(h)

Mobile phone B

190

FIG. 2B(a)

FIG. 2B(b)

Mobile phone B

1200

1300

FIG. 2B(c)

| Mobile phone A | | Satellite | | Mobile phone B |
|---|---|---|---|---|

S300: Currently in an out-of-network state

S301: First operation used to trigger sending of an image to the mobile phone B

S302: Determine a target file size (for example, 800 B)

S303: Compress the image to generate a multimedia data stream, where a data volume of the multimedia data stream is less than or equal to the target file size

S304: Multimedia data stream

S305: Multimedia data stream

S306: Receipt

S307: Decompress the multimedia data stream

S308: Display the image

FIG. 3

FIG. 4

Packet 1

| First field (X bits) | Second field (Y bits) | Third field (Z bits) |
|---|---|---|
| Receiver identifier | Multimedia type | Multimedia data stream |

FIG. 5A

Packet 1

| First field (X bits) | Second field (Y bits) | Reserved field (P bits) | Third field (Z bits) |
|---|---|---|---|
| Receiver identifier | Multimedia type | Sticker identifier | Multimedia data stream (empty) |

FIG. 5B

FIG. 5C

Mobile phone B 190

FIG. 6(a)

Mobile phone B 1100

FIG. 6(b)

Mobile phone B

FIG. 6(c)

Mobile phone A

(a)

(b)

(c)

FIG. 7A

FIG. 7B

FIG. 7C

EP 4 697 622 A1

Antenna 1　　Antenna 2

150　　160　　180

Mobile communication module
2G/3G/4G/5G

Wireless communication module
BT/WLAN/GNSS/NFC/IR/FM

170

110

Sensor module

170A — Speaker

170B — Receiver

170C — Microphone

170D — Headset jack

Audio
module

194 — Displays 1 to N

193 — Cameras 1 to N

192 — Indicator

191 — Motor

190 — Button

121 — Internal memory

195 — SIM card interfaces
1 to N

120 — Interface for external
memory

Processor

Pressure sensor — 180A

Gyroscope
sensor — 180B

Barometric
pressure sensor — 180C

Magnetic sensor — 180D

Acceleration
sensor — 180E

Distance sensor — 180F

Optical
proximity sensor — 180G

Fingerprint
sensor — 180H

Temperature
sensor — 180J

Touch sensor — 180K

Ambient light
sensor — 180L

Bone conduction
sensor — 180M

130 — USB interface

Charging
input

140

Charging
management
module

Power
management
module — 141

Battery — 142

FIG. 8

903                    Electronic device 900

┌─────────────────────┐
│   Communication     │
│     interface       │
└─────────────────────┘
                                        905
─────────────────────────────────────────────

            901                902

┌──────────────┐      ┌──────────────────────┐
│              │      │      Memory          │
│  Processor   │      │  ┌────────────────┐  │
│              │      │  │   Computer     │ 904
│              │      │  │   program      │  │
└──────────────┘      │  └────────────────┘  │
                      └──────────────────────┘

FIG. 9

## INTERNATIONAL SEARCH REPORT

| International application No. |
| --- |
| **PCT/CN2024/143128** |

**A.    CLASSIFICATION OF SUBJECT MATTER**

H04B 7/185(2006.01)i

According to International Patent Classification (IPC) or to both national classification and IPC

**B.    FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 多媒体, 流媒体, 媒体, 视频, 图像, 卫星, 无网络, 无信号, 压缩, Multimedia, Stream, Video, Image, Satellite, Netless, No signal, Satellite, Compress

**C.    DOCUMENTS CONSIDERED TO BE RELEVANT**

| Category* | Citation of document, with indication, where appropriate, of the relevant passages | Relevant to claim No. |
| --- | --- | --- |
| X | CN 117353799 A (GREAT WALL MOTOR CO., LTD.) 05 January 2024 (2024-01-05) description, paragraphs [0054]-[0156], and figures 1-6 | 1-18 |
| X | CN 207283720 U (BEIJING AEROSPACE TITAN TECHNOLOGY CO., LTD.) 27 April 2018 (2018-04-27) description, paragraphs [0020]-[0031] and figure 1 | 1-18 |
| Y | CN 108769615 A (SHENZHEN SKY SEA WORLD SATELLITE COMMUNICATION TECHNOLOGY CO., LTD.) 06 November 2018 (2018-11-06) claims 1-8, description, paragraph [0002], and figure 1 | 1-18 |
| Y | CN 115022253 A (XI'AN BEIDOU SAFETY TECHNOLOGY CO., LTD.) 06 September 2022 (2022-09-06) claims 1-10, description, paragraphs [0053]-[0054] and [0092], and figures 1-7 | 1-18 |
| A | US 2012191869 A1 (MICROSOFT CORP.) 26 July 2012 (2012-07-26) entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 March 2025** | **13 March 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/143128** |

| Patent document cited in search report | | | Publication date (day/month/year) | Patent family member(s) | | | Publication date (day/month/year) |
| --- | --- | --- | --- | --- | --- | --- | --- |
| CN | 117353799 | A | 05 January 2024 | None | | | |
| CN | 207283720 | U | 27 April 2018 | None | | | |
| CN | 108769615 | A | 06 November 2018 | None | | | |
| CN | 115022253 | A | 06 September 2022 | CN | 115022253 | B | 13 August 2024 |
| US | 2012191869 | A1 | 26 July 2012 | US | 8429697 | B2 | 23 April 2013 |
| | | | | US | 8151308 | B1 | 03 April 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410081118